# EUROPEAN PATENT SPECIFICATION

(11) **EP 3 053 158 B1**
(45) Date of publication and mention of the grant of the patent: **15.07.2020**
(21) Application number: 14793663.7
(22) Date of filing: 30.09.2014
(51) Int. Cl.: G09G 5/00, G06T 19/00, G09G 3/00

(54) **METHODS, APPARATUS, SYSTEMS, DEVICES, AND COMPUTER PROGRAM PRODUCTS FOR PROVIDING AN AUGMENTED REALITY DISPLAY AND/OR USER INTERFACE**
VERFAHREN, VORRICHTUNG, SYSTEME, EINRICHTUNGEN UND COMPUTERPROGRAMMPRODUKTE ZUR BEREITSTELLUNG EINER AUGMENTED-REALITY-ANZEIGE UND/ODER -BENUTZERSCHNITTSTELLE
PROCÉDÉS, APPAREIL, SYSTÈMES, DISPOSITIFS ET PRODUITS PROGRAMMES D'ORDINATEUR POUR FOURNIR UN AFFICHEUR ET/OU UNE INTERFACE D'UTILISATEUR À RÉALITÉ AUGMENTÉE

(30) Priority: 30.09.2013 US 201361884273 P
(43) Date of publication of application: 10.08.2016
(73) Proprietor: PCMS Holdings, Inc., Wilmington, DE 19809 (US)
(72) Inventor: SINGH, Mona, Cary, NC 27513 (US)
(74) Representative: AWA Denmark A/S
(86) International application number: PCT/US2014/058319
(87) International publication number: WO 2015/048749

(56) References cited:
- US-A1- 2011 164 163
- US-A1- 2011 242 134
- US-A1- 2011 279 445
- US-A1- 2012 306 850
- WOLFGANG HÜRST ET AL: "Gesture-based interaction via finger tracking for mobile augmented reality", MULTIMEDIA TOOLS AND APPLICATIONS, KLUWER ACADEMIC PUBLISHERS, BO, vol. 62, no. 1, 18 January 2012 (2012-01-18), pages 233-258, XP035159351, ISSN: 1573-7721, DOI: 10.1007/S11042-011-0983-Y

## Description

### CROSS-REFERENCE TO RELATED APPLICATIONS

This application claims the benefit of United States Provisional Application No. 61/884,273 filed September 30, 2013.

### BACKGROUND

Augmented reality (AR) may focus on combining real world and computer-generated data, for example, by blending augmentation information and real-world footage for display to an end user, generally in real or near-real time. Today, the scope of AR may be expanded to broad application areas, such as advertising, navigation, and entertainment to name a few. As such, there may be increasing interest in providing seamless integration of augmentation information into real-world scenes.

However, AR may present challenges such as new challenges for end user experience, and in particular, for appropriately displaying the augmentation information especially in view of its use with wearable devices or computers, navigation devices, smartphones, and/or the like and/or display footprint limitations associated with such devices. Further, current methods or techniques for displaying data on such devices, unfortunately, may not be suitable or thought out. For example, current methods or techniques for displaying augmentation information on wearable computers may be arbitrary, may display or provide an excessive amount of information from the augmentation that may overwhelm a user, and/or the like. US 2011/164163 A1 discloses an augmented reality device which can receive live video of a real-world, physical environment on a touch sensitive surface. One or more objects can be identified in the live video. An information layer can be generated related to the objects including annotations made by a user through the touch sensitive surface. The information layer and live video can be combined in a display of the device.

### SUMMARY

Methods, apparatus, systems, devices, and computer program products for providing an augmented reality display and/or user interface are provided and defined in the annexed independent method claim 1 and device claim 7. Such methods, apparatus, systems, devices, and computer program products may provide an augmented reality display and/or user interface that combines real-world video and a virtual object for presenting augmentation information in connection with a region of the real world video of interest ("region of interest") to a user. The region of interest may be based on a mapping between a designated position on the displayed real-world video, and a real-world and/or a localized map location corresponding to such designated position. The augmented reality display and/or user interface might include other augmentation information not associated with the region of interest, but such other augmentation information may be presented outside a region of the augmented reality display and/or user interface associated with the region of interest and attendant augmentation information.

### BRIEF DESCRIPTION OF THE DRAWINGS

A more detailed understanding may be had from the detailed description below, given by way of example in conjunction with drawings appended hereto. Figures in such drawings, like the detailed description, are examples. As such, the Figures and the detailed description are not to be considered limiting, and other equally effective examples are possible and likely. Furthermore, like reference numerals in the Figures indicate like elements, and wherein:
Figures 1 and 2 illustrate two examples of current-day AR user interfaces;
Figure 3 is a block diagram illustrating an example of an augmented reality system;
Figure 4 illustrates an example of a real-world video;
Figure 5 illustrates an example of an augmented reality display generated by an augmented reality system;
Figure 6 illustrates an example of an augmented reality display generated by an augmented reality system;
Figures 7A-7B illustrate examples of an augmented reality display generated by an augmented reality system;
Figures 8A-8E illustrate examples of an augmented reality displayed generated by an augmented reality system;
Figure 9 is a block diagram illustrating an example of an augmented reality system;
Figure 10 is a flow diagram illustrating an example method for presenting augmentation information in accordance with an embodiment.
Figure 11 is a flow diagram illustrating an example method for presenting augmentation information in accordance with an embodiment.
Figure 12 is a flow diagram illustrating an example method for presenting augmentation information in accordance with an embodiment;
Figure 13 is a flow diagram illustrating an example method for presenting augmentation information in accordance with an embodiment;
Figure 14A is a system diagram of an example communications system in which one or more disclosed embodiments may be implemented;
Figure 14B is a system diagram of an example wireless transmit/receive unit (WTRU) that may be used within the communications system illustrated in Figure 14A; and
Figures 14C, 14D, and 14E are system diagrams of example radio access networks and example core networks that may be used within the communications system illustrated in Figure 14A.

### DETAILED DESCRIPTION

In the following detailed description, numerous specific details are set forth to provide a thorough understanding of embodiments and/or examples disclosed herein. However, it will be understood that such embodiments and examples may be practiced without some or all of the specific details set forth herein. In other instances, well-known methods, procedures, components and circuits have not been described in detail, so as not to obscure the following description. Further, embodiments and examples not specifically described herein may be practiced in lieu of, or in combination with, the embodiments and other examples described, disclosed or otherwise provided explicitly, implicitly and/or inherently (collectively "provided") herein.

As described herein, augmented reality (AR) may focus on combining real world and computer-generated data, for example, by blending augmentation information and real-world footage for display to an end user, generally in real or near-real time. Today, the scope of AR may be expanded to broad application areas such as advertising, navigation, entertainment, and/or the like. As such, there may be increasing interest in providing seamless integration of augmentation information into real-world scenes.

However, AR may present challenges such as new challenges for end user experience, and in particular, for appropriately displaying the augmentation information especially in view of its use with wearable devices or computers, navigation devices, smartphones, and/or the like and/or display footprint limitations associated with such devices. Further, current methods or techniques for displaying data on such devices, unfortunately, may not be suitable or thought out. For example, current methods or techniques for displaying augmentation information on wearable computers may be arbitrary, may display or provide an excessive amount of information from the augmentation that may overwhelm a user, and/or the like.

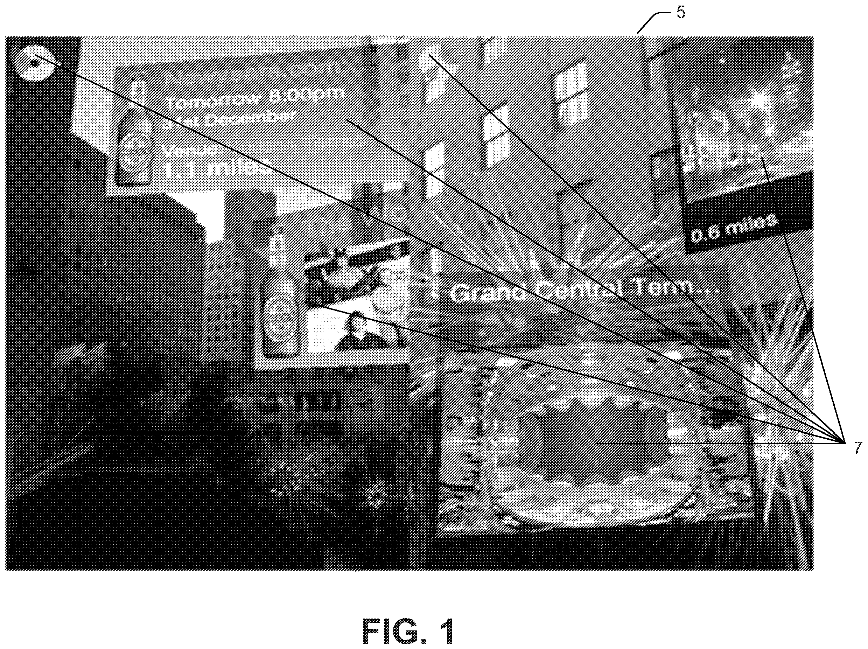

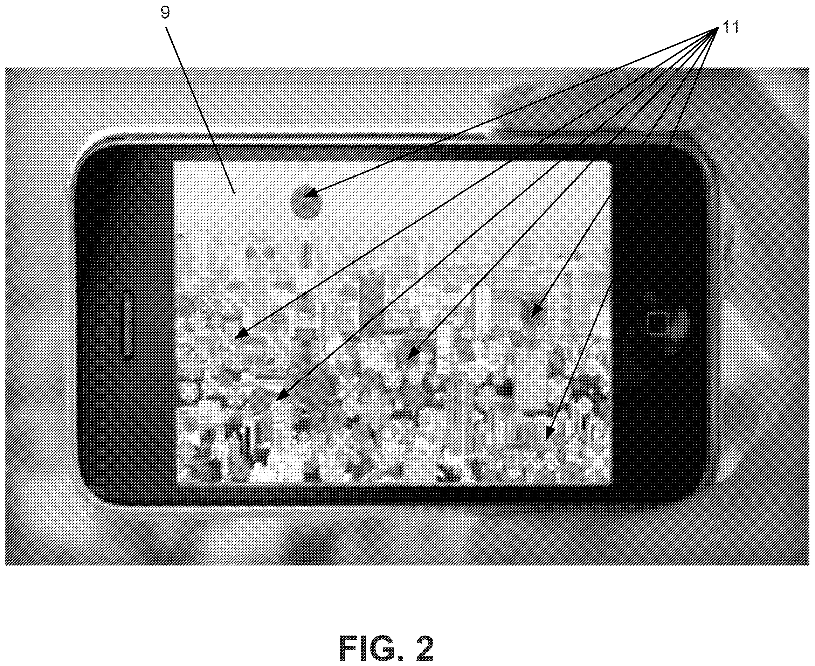

Examples of such AR systems that may provide too much augmentation information on the screen may be shown in Figures 1-2. As shown, in Figures 1-2 current user interfaces 5, 9 may include augmentation information 7, 11 that may be excessive such that it may overwhelm a user. As such, interfaces that may have less information may be beneficial and/or desired for a user. In fact, usability researchers have demonstrated that, often, less information may be better than more information. Accordingly, systems and/or methods (e.g., as described herein) that may present the augmentation information that may be easier for a user to consume may be beneficial to present the augmentation information in a way that it can be easily consumed by a user.

Examples herein may provide and/or describe methods, apparatus, systems, devices, and computer program products related to augmented reality. In examples, such methods, apparatus, systems, devices, and computer program products for providing an augmented reality display and/or user interface that combines a view ("real-world view") of a real world scene and a virtual object for presenting augmentation information in connection with a region of the real-world scene of interest ("region of interest") to a user. The region of interest may be based on a mapping between (i) a designated position ("designated roi-basis position") on the displayed real-world view, and (ii) a real-world and/or a localized map location corresponding to such designated position ("correspondent roi-basis location").

The region of interest may be, simply, the correspondent roi-basis location, or alternatively or additionally, may specified by rule. The region of interest may be, for example, a set of real-world and/or a localized map locations ("roi location set") related to the correspondent roi-basis location. The roi location set may define metes and bounds of the region of interest. The roi location set may be associated with, or correspond to, a real-world object depicted in the displayed real-world view (e.g., neighboring and/or within a vicinity of the designated roi-basis position). Alternatively, the roi location set may be associated with, or correspond to, a single real-world object and portions of one or more other real-world objects depicted in the displayed real-world view. As another alternative, the roi location set may be associated with, or correspond to, some, but not all, real-world objects depicted in the displayed real-world view. In general, the roi location set may be associated with, or correspond to, any portion of the displayed real-world view other than the entire displayed real-world view.

The augmented reality display may include a virtual object ("emphasizing virtual object") for visually emphasizing the region of interest. The emphasizing virtual object may overlay the some or the entire region of interest. The emphasizing virtual object may be, for example, an outline, highlight, etc. of the region of interest or an element thereof (e.g., a real-world object depicted in the real-world view).

The virtual object may be displayed on the augmented reality display in connection with the region of interest at any number of appropriate locations. For example, the virtual object may be displayed proximate to any of (i) the region of interest; (ii) the designated roi-basis position; (iii) the designated roi-basis position and adjacent to the region of interest; (iv) the correspondent roi-basis location. Alternatively and/or additionally, the virtual object may be displayed so as to not occlude a real-world object associated with the region of interest. The virtual object may be displayed so as not occlude another virtual object neighboring the region of interest. The virtual object may be displayed so as not occlude another virtual object. The virtual object may be displayed to occlude one or more objects (real-world or otherwise) outside the region of interest.

The augmented reality display and/or user interface might include other augmentation information (e.g., one or more virtual objects) not associated with the region of interest, but such other augmentation information may be presented outside (e.g., at a periphery of) a region of the augmented reality display and/or user interface associated with (e.g., reserved for) the region of interest and attendant augmentation information.

The virtual object may have a plurality of states for presenting respective presentation types of the augmentation information. The virtual object, for example, may be in a first (e.g., a compact) state for presenting a summary representation of the augmentation information ("summary"). Alternatively and/or additionally, the virtual object may be in a second (e.g., a non-compact, enlarged, extended, expanded, etc.) state for presenting fuller detail of the augmentation information ("fuller augmentation details").

The summary may include, for example, any of an icon, an image, text, a concise representation of the augmentation information, and the like. The fuller augmentation details may include any augmentation information in addition to, and/or supplementary to, the summary.

The virtual object may transition from one state to another state, and back again. For example, the virtual object may transition from the first state to the second state, and from the second state to the first state. The state change may be continuous or discontinuous. For example, the virtual object may transition from the compact state to the non-compact state by expanding (e.g., growing in size) from the compact state, and/or may transition from the non-compact state to the compact state by reducing (e.g., shrinking in size) back to the compact state. Alternatively and/or additionally, the virtual object may transition from the compact state to the non-compact state by switching to a partially or fully enlarged state, and/or may transition from the non-compact state to the compact state by switching back to the compact state. In some embodiments, the virtual object may transition from the compact state to the non-compact state by appending or otherwise adding a supplementary virtual object, and/or may transition from the non-compact state to the compact state by returning back to (e.g., removing the supplementary virtual object from) the compact state.

The transition from one state to another may be based on (e.g., occur responsive to) whether an interest (or a user expression of interest) in the virtual object may be detected. As an example, the virtual object may be in and/or transition back to the first (e.g., compact) state when no indication of interest in the virtual object may be detected and/or can be inferred. The virtual object may be in and/or transition to the second (e.g., non-compact) state when an indication of interest ("interest indication") in the virtual object may be detected and/or can be inferred. The interest indication may have values ("interest-indication values") commensurate with varying degrees of interest, such as, for example "minimally interested", "somewhat interested", "fully interested", and/or the like. As an example, the interest-indication values may be based on (e.g., scale with corresponding values on) a sliding scale that has "minimally interested" towards one end to "fully interested" towards the other end with various intermediate degrees of interest in-between. In addition to being used to transition to the second (e.g., non-compact) state, the interest-indication values may be used to control expansion (growth and/or shrinkage) of the virtual object while in the second state.

The augmentation information may be organized in a list format. Alternatively, the augmentation information may be organized in a non-linear pattern. The augmentation information may be displayed in a subdued format. The augmentation information may displayed in a more prominent format responsive to an eye tracking system indicating a user's gaze may be approaching the virtual object. The augmentation information may be displayed with constant prominence.

The augmentation information may be displayed in a given color. The color may become darker responsive to an eye tracking system indicating a user's gaze may be approaching the virtual object. Alternatively and/or additionally, the color may become lighter responsive to an eye tracking system indicating a user's gaze may be approaching the virtual object.

The augmentation information may be displayed at a given size. The size may become larger responsive to an eye tracking system indicating a user's gaze may be approaching the virtual object, and/or the size may grow in proportion to distance. Alternatively and/or additionally, the size may become smaller responsive to an eye tracking system indicating a user's gaze may be retreating from the virtual object, and/or the size may shrink in proportion to distance.

The methods, apparatus, systems, devices, and computer program products may include a method that, in certain representative embodiments, may include displaying, on a display unit, a real-world view of a real world scene. In certain representative embodiments, the method may include determining a region of interest on the real world scene based on a mapping between a designated position (designated roi-basis position) on the displayed real-world view and a real-world location and/or a localized map location corresponding to the designated position (correspondent roi-basis location). In certain representative embodiments, the method may include obtaining a virtual object for presenting augmentation information in connection with the region of interest. In certain representative embodiments, the virtual object may have a plurality of states for presenting respective presentation types of the augmentation information. In certain representative embodiments, the method may include generating an augmented reality display by combining the real-world view and the virtual object. In certain representative embodiments, the method may include displaying, on the display unit, the augmented reality display with the virtual object in a first state of the plurality of states. In certain representative embodiments, the method may include obtaining an indication of interest in the virtual object depicted on the augmented reality display. In certain representative embodiments, the method may include displaying the virtual object in a second state of the plurality of states responsive to the indication of interest.

The methods, apparatus, systems, devices, and computer program products may include a method that, in certain representative embodiments, may include displaying, on a display unit, a real-world view of a real world scene. In certain representative embodiments, the method may include determining a region of interest on the real world scene based on a mapping between a designated position (designated roi-basis position) on the displayed real-world view and a real-world location corresponding to the designated position (correspondent roi-basis location). In certain representative embodiments, the method may include obtaining augmentation information for use in connection with the region of interest. In certain representative embodiments, the method may include generating a virtual object for presenting the augmentation information. In certain representative embodiments, the method may include the virtual object may have a plurality of states for presenting respective presentation types of the augmentation information. In certain representative embodiments, the method may include generating an augmented reality display integrating an on-going real-world view of the real world scene and the virtual object. In certain representative embodiments, the method may include displaying, on the display device, the augmented reality display with the virtual object being displayed in the first state. In certain representative embodiments, the method may include obtaining an indication of interest in the virtual object disposed in the displayed augmented reality display. In certain representative embodiments, the method may include displaying the virtual object in the second state responsive to the indication of interest.

In certain representative embodiments, determining a region of interest may include obtaining the designated roi-basis location. In certain representative embodiments, determining a region of interest may include detecting, at least one portion of, a depiction of a real-world object of the displayed real-world view neighboring and/or within a vicinity of the correspondent roi-basis location. In certain representative embodiments, determining a region of interest may include determining a real-world location for the at least one portion of the depicted real-world object. In certain representative embodiments, determining a region of interest may include determining a correspondent roi-basis location based on the real-world location for the at least one portion of the depicted real-world object. In certain representative embodiments, determining a region of interest may include mapping the designated roi-basis position to the correspondent roi-basis location.

In certain representative embodiments, determining a real-world location for the at least one portion of the depicted real-world object may include determining a position of the at least one portion of the depicted real-world object on the displayed real-world view. In certain representative embodiments, determining a real-world location for the at least one portion of the depicted real-world object may include translating the position of the at least one portion of the depicted real-world object to a real-world location for the at least one portion of the depicted real-world object.

In certain representative embodiments, determining a region of interest may include determining one or more real-world locations (e.g., one or more sets of real-world coordinates) associated with the correspondent roi-basis location.

In certain representative embodiments, determining a region of interest may include determining one or more real-world locations (e.g., one or more sets of real-world coordinates) associated with the correspondent roi-basis location.

In certain representative embodiments, determining a region of interest may include determining one or more real-world locations (e.g., one or more sets of real-world coordinates) associated with correspondent roi-basis location based on a rule, such as, for example, one or more sets of coordinates, a real-world object closest to the designated position, etc.

The methods, apparatus, systems, devices, and computer program products may include a method that, in certain representative embodiments, may include displaying a real-world view on a display unit. In certain representative embodiments, the method may include identifying a real-world object associated (e.g., in connection) with a region of interest associated with the displayed real-world view. In certain representative embodiments, the method may include obtaining a virtual object for presenting augmentation information in connection with the identified real-world object. In certain representative embodiments, the virtual object may have a plurality of (e.g., first, second, third, etc.) states for presenting respective (e.g., first, second, third, etc.) presentation types of the augmentation information. In certain representative embodiments, the method may include generating an augmented reality display by combining an on-going real-world view and the virtual object. In certain representative embodiments, the method may include displaying the augmented reality display on the display unit. In certain representative embodiments, the virtual object may be displayed in a first state of the plurality of states (e.g., initially, by default, when not of interest to the user, etc.). In certain representative embodiments, the method may include obtaining an indication of interest in the virtual object depicted in the displayed augmented reality display. In certain representative embodiments, the method may include displaying the virtual object in a second state of the plurality of states responsive to the indication of interest.

The methods, apparatus, systems, devices, and computer program products may include a system that, in certain representative embodiments, may include an image capture unit. In certain representative embodiments, image capture unit may capture a (e.g., snapshot of a) real-world view. In certain representative embodiments, the system may include a display unit. In certain representative embodiments, the display unit may display the captured and/or an on-going real-world view. In certain representative embodiments, the system may include an object identification unit. In certain representative embodiments, the object identification unit may identify a real-world object associated with a region of interest associated with the displayed real-world view.

In certain representative embodiments, the system may include a user recognition unit. In certain representative embodiments, the user recognition unit may obtain, from a user, an input indicating the region of interest associated with the displayed real-world view. In certain representative embodiments, the user recognition unit may provide the user input to object identification unit for use in identifying the real-world object associated with the region of interest.

In certain representative embodiments, the system may include an augmented reality engine. In certain representative embodiments, the augmented reality engine may obtain a virtual object for presenting augmentation information in connection with the identified real-world object. The virtual object may have a plurality of (e.g., first, second, third, etc.) states for presenting respective (e.g., first, second, third, etc.) presentation types of the augmentation information. In certain representative embodiments, the system may include a virtual object repository from which the augmented reality engine may obtain (e.g., retrieve) the virtual object.

In certain representative embodiments, the augmented reality engine may generate an augmented reality display by combining an ongoing real-world view and the virtual object. In certain representative embodiments, the display unit may display the augmented reality display. In certain representative embodiments, the virtual object may be displayed in a first state of the plurality of states (e.g., initially, by default, when not of interest to the user, etc.). In certain representative embodiments, the user recognition unit may obtain, from the user, an input indicating an interest in the virtual object depicted in the displayed augmented reality display. In certain representative embodiments, the virtual object may be displayed in a second state of the plurality of states responsive to the user input indicating an interest in the virtual object.

Among the methods, apparatus, systems, devices, and computer program products may be a method that, in certain representative embodiments, may include displaying a real-world view on a display unit. In certain representative embodiments, the method may include a real-world object associated with a region of interest associated with the displayed real-world view. In certain representative embodiments, the method may include obtaining augmentation information for use in connection with the identified real-world object. In certain representative embodiments, the method may include generating a virtual object for presenting the augmentation information. In certain representative embodiments, the generated virtual object may have a plurality of (e.g., first, second, third, etc.) states for presenting respective (e.g., first, second, third, etc.) types of the obtained augmentation information. In certain representative embodiments, the method may include displaying the augmented reality display on the display unit. In certain representative embodiments, the virtual object may be displayed in a first state of the plurality of states (e.g., initially, by default, when not of interest to the user, etc.). In certain representative embodiments, the method may include obtaining an indication of interest in the virtual object depicted in the displayed augmented reality display. In certain representative embodiments, the method may include displaying the virtual object in a second state of the plurality of states responsive to the indication of interest.

The methods, apparatus, systems, devices, and computer program products may be a system that, in certain representative embodiments, may include an image capture unit. In certain representative embodiments, image capture unit may capture a (e.g., snapshot of a) real-world view. In certain representative embodiments, the system may include a display unit. In certain representative embodiments, the display unit may display the captured and/or an on-going real-world view. In certain representative embodiments, the system may include an object identification unit. In certain representative embodiments, the object identification unit may identify a real-world object associated with a region of interest associated with the displayed real-world view.

In certain representative embodiments, the system may include a user recognition unit. In certain representative embodiments, the user recognition unit may obtain, from a user, an input indicating the region of interest associated with the displayed real-world view. In certain representative embodiments, the user recognition unit may provide the user input to object identification unit for use in identifying the real-world object associated with the region of interest.

In certain representative embodiments, the system may include an augmented reality engine. In certain representative embodiments, the augmented reality engine may obtain augmentation information for use in connection with the identified real-world object. In certain representative embodiments, the system may include an augmentation-information repository from which the augmented reality engine may obtain (e.g., retrieve) the augmentation information. In certain representative embodiments, the augmented reality engine may generate a virtual object for presenting the augmentation information. In certain representative embodiments, the generated virtual object may have a plurality of (e.g., first, second, third, etc.) states for displaying respective (e.g., first, second, third, etc.) presentation types of the obtained augmentation information.

In certain representative embodiments, the augmented reality engine may generate an augmented reality display by combining an on-going real-world view and the virtual object. In certain representative embodiments, the display unit may display the augmented reality display. In certain representative embodiments, the virtual object may be displayed in a first state of the plurality of states (e.g., initially, by default, when not of interest to the user, etc.). In certain representative embodiments, the user recognition unit may obtain, from the user, an input indicating an interest in the virtual object depicted in the displayed augmented reality display. In certain representative embodiments, the virtual object may be displayed in a second state of the plurality of states responsive to the user input indicating an interest in the virtual object.

The foregoing overview may be illustrative and may be not intended to be in any way limiting. In addition to the illustrative aspects, embodiments, and features described above, further aspects, embodiments, and features will become apparent by reference to the drawings and the following description.

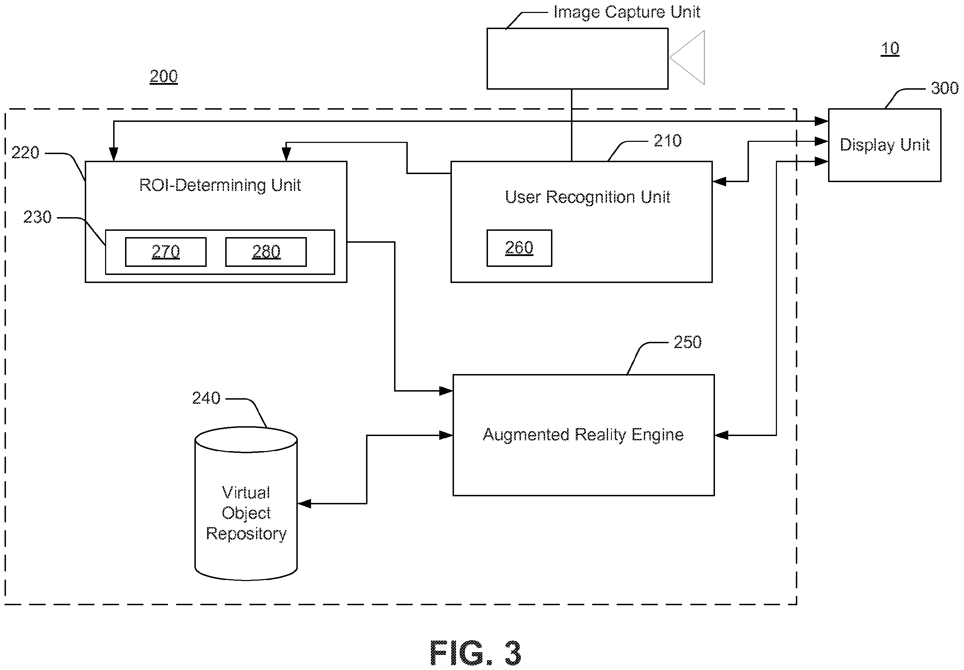

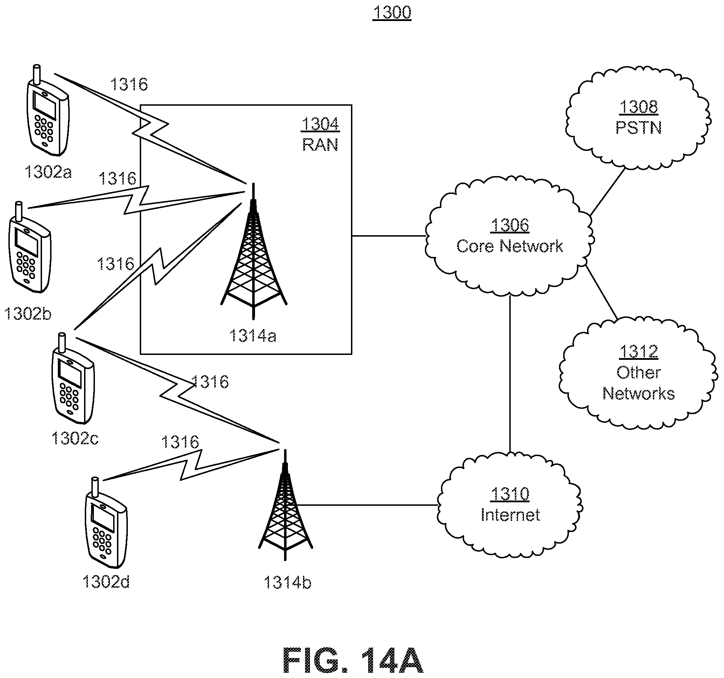

Figure 3 is a block diagram illustrating an example of an augmented reality system 10 in accordance with at least some embodiments described herein. The augmented reality system 10 may be used and/or implemented in a computing device. As used herein, the term "computing device" refers to any kind of device that can receive, process and display information. In certain representative embodiments, the computing device may be a wearable computer; a smartphone; a wireless transmit/receive unit (WTRU), such as described with reference to Figures 14A-14E (below); another type of user equipment (UE) or the like. Other examples of the computing device include a mobile device, personal digital assistant (PDA), a cellular phone, a portable multimedia player (PMP), a digital camera, a notebook, and a tablet computer, a vehicle navigation computer (e.g., with a heads-up display). In general, the computing device includes a processor-based platform that operates on a suitable operating system, and that may be capable of executing software.

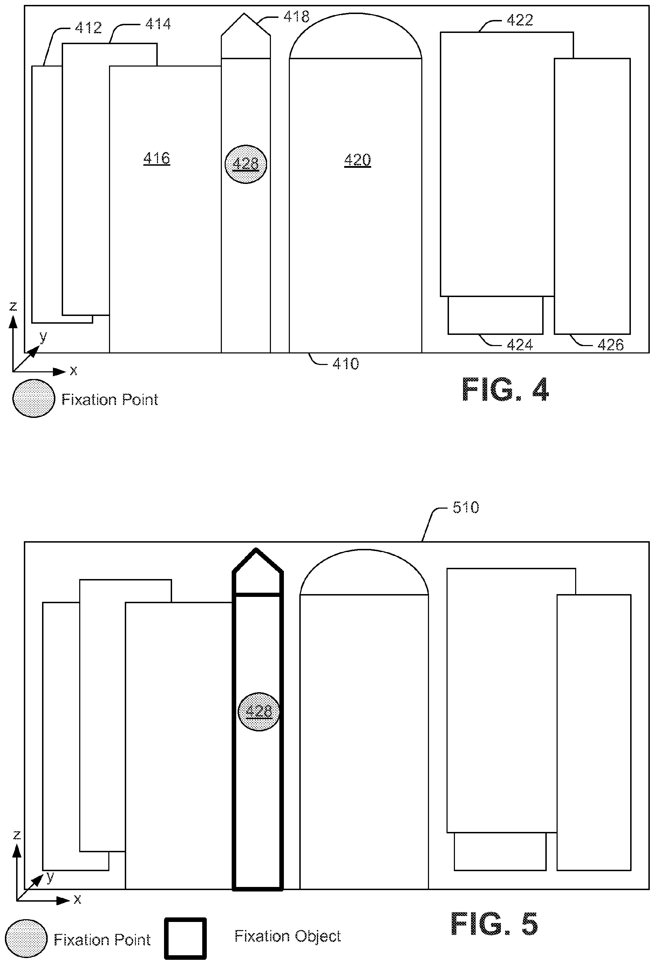

The augmented reality system 10 will be described below with reference to illustrative example images shown in Figures 4-8. Referring to Figure 3, the augmented reality system 10 may include an image capture unit 100, an augmented reality unit 200 and a display unit 300.

The image capture unit 100 may capture real-world views of real-world scenes (e.g., video), and provide the real-world views to the display unit 300 and/or to the augmented reality unit 200. The image capture unit 100, for example, may capture various real-world views (collectively "real-world view") 410 of a real world scene as illustrated in Figure 4, and provide the real-world view 410 to the display unit 300 and/or to the augmented reality unit 200. The image capture unit 100 may be, or include, any of a digital camera, a camera embedded in a mobile device, a head mounted display (HMD), an optical sensor, an electronic sensor, and the like.

The display unit 300 may display real-world views and/or an augmented reality display and/or a display portion of an augmented reality user interface (collectively, "augmented reality display"). The display unit 300, for example, may display the real-world view 410 and/or an augmented reality display 510 as illustrated in Figures 5-8.

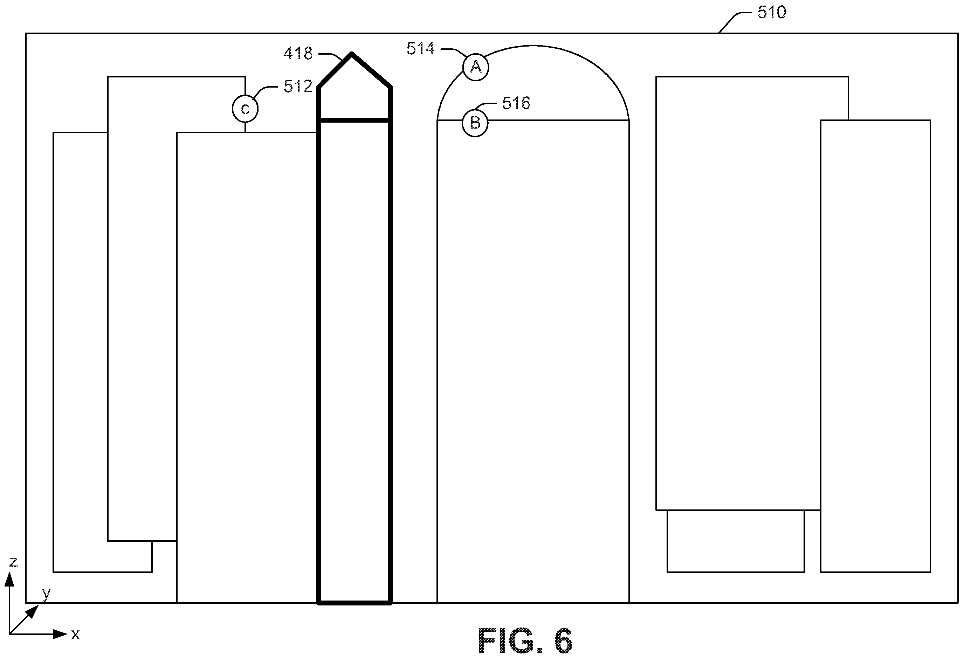

The displayed real-world view 410 may include a plurality of depictions of real-world objects (for simplicity, "real-world objects") 412, 414, 416, 418, 420, 422, 424 and 426. The real-world view 410 may include more or less than the eight real-world objects shown, and/or may include real-world objects other than or different from those shown. The augmented reality display 510 may combine the on-going real-world view 410 and virtual objects 512, 514 and 516 (Figures 6-7). The augmented reality display 510 may include more or less than the eight real-world and three virtual objects shown, and/or may include real-world and virtual objects other than or different from those shown.

The display unit 300 may include a screen of a computing device. As described in more detail below, one or more user inputs may be received by, through and/or in connection with user interaction with the display unit 300. For example, a user may input a user input or selection by and/or through touching, clicking, drag-and-dropping, gazing at, voice/speech recognition and/or other interaction in connection with real-world views (e.g., real-world view 410) and/or augmented reality displays (e.g., augmented reality display 510) displayed on display unit 300.

The augmented reality unit 200 may generate augmented reality displays, and provide the generated augmented reality displays to the display unit 300. The augmented reality unit 200 may include a user recognition unit 210, a region-of-interest-determining unit 220, a virtual object repository 240 and an augmented reality engine 250.

The user recognition unit 210 may recognize user inputs related to real-world views and/or augmented reality displays. The user recognition unit 210, for example, may recognize user inputs related to any of the (displayed and/or captured) real-world view 410; augmented reality display 510; real-world objects depicted in the real-world view 410 and/or augmented reality display 510, such as, the real-world objects 412-426; and virtual objects depicted in the augmented reality display, such as, the virtual objects 512, 514 and 516. The user inputs may be provided to the augmented reality unit 200, including, for example, the region-of-interest-determining unit 220 and the augmented reality engine 250; and display unit 300, as appropriate.

Among the user inputs that the user recognition unit 210 may recognize may be a user input that may be indicative of the user's designation or a user expression of designation of a position ("designated position") 428 on the displayed real-world view 410 and/or the augmented reality display 510. Also among the user inputs that the user recognition unit 210 may recognize may be a user input that may be indicative of the user's interest or a user expression of interest ("interest indication") in one or more of the virtual objects depicted in the augmented reality display 510.

The user recognition unit 210 may recognize user inputs provided by one or more input device technologies. The user recognition unit 210, for example, may recognize the user inputs made by touching or otherwise manipulating the display unit 300 (e.g., by way of a touchscreen or other like type device). Alternatively, the user recognition unit 210 may recognize the user inputs captured by the image capture unit 100 and/or another image capture unit by using an algorithm for recognizing interaction between a finger tip of the user captured by a camera and the display unit 300. Such algorithm, for example, may be in accordance with a Handy Augmented Reality method. Here, it will be apparent to those skilled in the art that user recognition unit 210 may use algorithms other than the Handy Augmented Reality method.

As another alternative, the user recognition unit 210 may recognize the user inputs provided from an eye-tracking unit 260. In general, the eye tracking unit 260 employs eye tracking technology to gather data about eye movement from one or more optical sensors, and based on such data, track where the user may be gazing and/or make user input determinations based on various eye movement behaviors. The eye tracking unit 260 may use any of various known techniques to monitor and track the user's eye movements.

The eye tracking unit 260 may receive inputs from optical sensors that face the user, such as, for example, the image capture unit 100, a camera (not shown) capable of monitoring eye movement as the user views the display unit 300, or the like. The eye tracking unit 260 may detect the eye position and the movement of the iris of each eye of the user. Based on the movement of the iris, the eye tracking unit 260 may make various observations about the user's gaze. For example, the eye tracking unit 260 may observe saccadic eye movement (the rapid movement of the user's eyes), and/or fixations (dwelling of eye movement at a particular point or area for a certain amount of time).

The eye tracking unit 260 may generate one or more of the user inputs by employing an inference that a fixation on a point or area (collectively "focus region") on the screen of the display unit 300 may be indicative of interest in a portion of the real-world view 410, or augmented reality display 510, underlying the focus region. The eye tracking unit 260, for example, may detect a fixation at a focus region on the screen of the of the display unit 300 mapped to the designated position 428, and generate the user input based on the inference that fixation on the focus region may be a user expression of designation of the designated position 428.

The eye tracking unit 260 may also generate one or more of the user inputs by employing an inference that the user's gaze toward, and/or fixation on a focus region corresponding to, one of the virtual objects depicted in the augmented reality display 510 may be indicative of the user's interest (or a user expression of interest) in the corresponding virtual object. The eye tracking unit 260, for example, may detect the user's gaze toward the virtual object 514, and/or fixation on a focus region on the screen of the of the display unit 300 mapped to the virtual object 514, and generate the user input based on the inference may be a user expression of interest in the virtual object 514.

Any of the user inputs indicating an interest in one (or more) of the real-world objects 412-426 may include a location (e.g., one or more sets of coordinates) associated with the displayed real-world view 410. Any of the user inputs indicating an interest in one or more of the virtual objects 512-516 may include a location (e.g., one or more sets of coordinates) associated with the displayed augmented reality display 510.

The region-of-interest-determining unit 220 may determine a region of interest on the real-world view 410. The determined region of interest may be based on a mapping between the designated position ("designated roi-basis position") 428 and a real-world location and/or a localized map location corresponding to the designated roi-basis position 428 ("correspondent roi-basis location").

The region-of-interest-determining unit 220 may include an object identification unit 230. The region-of-interest-determining unit 220 may obtain the designated roi-basis position 428 from the user recognition unit 210, and may provide it to the object identification unit 230.

The object identification unit 230 may identify real-world objects associated with a designated position on displayed real-world views and/or augmented reality displays. The object identification unit 230, for example, may use the designated roi-basis position 428 to detecting, at least one portion of, one or more of the real-world objects 412-426 neighboring and/or within a vicinity of the designated roi-basis position 428..

The object identification unit 230 may include an object recognition unit 270 and a depth recognition unit 280. The object recognition unit 270 may perform object detection on real-world views. The object recognition unit 270, for example, may perform object detection on the real-world view 410 using the designated roi-basis position 428 and obtain a representation ("representative real-world object") of the real-world object 418. The object recognition unit 270 may use any of various known technical methodologies for performing the object detection, including, for example, edge detection, primal sketch, changes in viewing direction, changes in luminosity and color, etc.

The depth recognition unit 280 may obtain spatial attributes of captured real-world video. The depth recognition unit 280, for example, may determine a real-world and/or localized map location for the representative real-world object. The depth recognition unit 280 may determine a position of at least one portion of the representative real-world object ("representative-real-world-object position"), and determine a real-world and/or localized map location for the portion of the representative real-world object based on the representative-real-world-object position. In some embodiments, the depth recognition unit 280 may translate the representative-real-world-object position to a real-world and/or a localized map location for the determined portion of the representative real-world object.

In some embodiments, the depth recognition unit 280 may determine the representative-real-world-object position, and/or determine the corresponding real-world and/or localized map location as follows. The depth recognition unit 280 may calculate x, y and z axes for the real-world video 410, and obtain a set of x, y and z coordinates for the representative real-world object. To obtain the x, y and z axes and the set of x, y and z coordinates, the depth recognition unit 280 may use a location recognition algorithm. The location recognition algorithm used may be an algorithm that may be well known in the art (e.g., a Parallel Tracking and Mapping (PTAM) method and/or a Simultaneous Localization and Mapping (SLAM) method), and may be implemented without the need for further explanation herein. Although not shown, the depth recognition unit 280 may obtain and use positioning information (e.g., latitude, longitude, attitude, etc.) for mapping the x, y and z axes to real world coordinates and/or for mapping the set of x, y and z coordinates for the representative real-world object to a set of real world coordinates. The positioning information may be obtained from a global position system (GPS) receiver (not shown) communicatively coupled to the augmented reality unit 200 and/or via network assistance (such as, from any type of network node of a network (self-organizing or otherwise)).

The region-of-interest-determining unit 220 may obtain from the object identification unit 230 the set of x, y and z coordinates and/or the set of real world coordinates associated with the representative real-world object. The region-of-interest-determining unit 220 may determine (e.g., calculate) the real-world and/or localized map location corresponding to the designated roi-basis position 428 based on the obtained set of real-world coordinates and/or the set of x, y and z coordinates associated with the representative real-world object. The region-of-interest-determining unit 220 may map, correlate or otherwise associate the correspondent roi-basis location to the determined real-world and/or localized map location for the designated roi-basis position 428.

The region of interest may be set by region-of-interest-determining unit 220 to the correspondent roi-basis location. Alternatively and/or additionally, the region of interest may be specified by rule. The region of interest may be, for example, a set of real-world and/or a localized map locations ("roi location set") related to the correspondent roi-basis location. The roi location set may define metes and bounds of the region of interest.

The roi location set may be associated with, or correspond to, representative real-world object or another real-world object depicted in the displayed real-world view 410 (e.g., neighboring and/or within a vicinity of the designated roi-basis position). Alternatively, the roi location set may be associated with, or correspond to, the representative real-world object (or other single real-world object) and portions of one or more the other real-world objects 412-426. As another alternative, the roi location set may be associated with, or correspond to, some, but not all of, the real-world objects 412-426. In general, the roi location set may be associated with, or correspond to, any portion of the displayed real-world view 410 other than the entire displayed real-world view 410.

The region-of-interest-determining unit 220 may provide the region of interest to the augmented reality engine 250. The augmented reality engine 250 may generate augmented reality displays, and/or provide the augmented reality displays to the display unit 300. The augmented reality engine 250, for example, may generate the augmented reality display 510. To facilitate generating the augmented reality display 510, the augmented reality engine 250 may use the region of interest to query the virtual object repository 240.

The virtual object repository 240 may store virtual objects for presenting augmentation information in connection with the region of interest. The virtual object repository 240, for example, may store the virtual objects 512, 514, 516, 520a-e, 522a-b, and/or 520al-a4. The virtual objects 512, 514, 516, 520a-e, 522a-b, and/or 520al-a4and any other virtual objects associated with the real-world object of interest 418 may be stored in association with (e.g., indexed by) real-world and/or localized map locations commensurate with the region of interest.

The virtual object repository 240 may also store virtual objects associated with the real-world objects 412, 414, 416, 420, 422, 424 and/or 426 and/or other virtual objects associated with the region of interest (e.g., including virtual objects 512, 514, 516, 520a-e, 522a-b, and/or 520a1-a4). Each of the virtual objects associated with the real-world objects 412, 414, 416, 420, 422, 424 and/or 426 may be stored in association with (e.g., indexed by) real-world and/or localized map locations commensurate with one or more of the real-world objects 412, 414, 416, 420, 422, 424 and/or 426.

The virtual object repository 240, for example, may retrieve the virtual objects 512, 514 and 516 using the region of interest passed to it in the query. The virtual object repository 240 may provide the retrieved the virtual objects (e.g., including virtual objects 512, 514, 516, 520a-e, 522a-b, and/or 520al-a4) to the augmented reality engine 250 in response to the query.

The augmented reality engine 250 may generate the augmented reality display 510 by combining the on-going real-world view 410 and the virtual objects 12, 514, 516, 520a-e, 522a-b, and/or 520al-a4. The virtual objects 512, 514 and 516 may be arranged at any number of positions within the augmented reality display 510. For example, the virtual objects 12, 514, 516, 520a-e, 522a-b, and/or 520al-a4may be arranged at positions in a vicinity of the region of interest. The virtual objects 512, 514, 516, 520a-e, 522a-b, and/or 520al-a4may be arranged at positions proximate to the region of interest. Arranging the virtual objects 12, 514, 516, 520a-e, 522a-b, and/or 520al-a4 in close proximity to the region of interest may reduce a distance the user's eyes travel to focus on the augmentation information. The virtual objects 512, 514, 516, 520a-e, 522a-b, and/or 520al-a4 may be arranged at positions proximate to the correspondent roi-basis location.

The virtual objects 512, 514, 516, 520a-e, 522a-b, and/or 520al-a4 may be arranged at positions proximate to the correspondent roi-basis location and adjacent to a real-world object such as the real-world object 418 and/or 420. The virtual objects 512, 514, 516, 520a-e, 522a-b, and/or 520al-a4 may be arranged at positions so as not occlude one or more of the real-world objects 412-426. The virtual objects 512, 514, 516, 520a-e, 522a-b, and/or 520al-a4 may be arranged at positions so as not occlude each other or another virtual object. The virtual objects 512, 514, 516, 520a-e, 522a-b, and/or 520al-a4 may be arranged at positions to occlude other objects (real-world or otherwise) outside the region of interest.

The virtual objects 512, 514, 516, 520a-e, 522a-b, and/or 520al-a4 may be arranged at positions based on distances between the user and the virtual objects 512, 514, 516, 520a-e, 522a-b, and/or 520al-a4. For example, some of virtual objects virtual objects 512, 514, 516, 520a-e, 522a-b, and/or 520al-a4 at smaller (nearer) distances from the user may be displayed on augmented reality image 510 larger than others of virtual objects 512, 514, 516, 520a-e, 522a-b, and/or 520al-a4 at larger (further) distances from the user.

A virtual object such as the virtual object 514 as an example may have a plurality of states for presenting respective presentation types of the augmentation information. The virtual object 514, for example, may be in a compact state for presenting a summary. Additionally and/or alternatively, the virtual object 514 may be in a non-compact (e.g., enlarged, extended, expanded, etc.) state for presenting the fuller augmentation details.

The summary may include, for example, any of an icon, an image, text, a concise representation of the augmentation information, and the like. The fuller augmentation details may include any augmentation information in addition to, and/or supplementary to, the summary.

The fuller augmentation details may include one or more messages related to the virtual objects 512, 514, 516, 520a-e, 522a-b, and/or 520al-a4. Such messages may include an entity such as, for example, text data, graphical data, or numerical data. The text data may include any information, such as, an advertisement, a traffic report, directions, and a news report. The graphical data may include a symbol or an icon such as a warning icon. The numerical data may be locations (e.g., respective sets of x, y and z coordinates) of the virtual objects 512, 514, 516, 520a-e, 522a-b, and/or 520al-a4.

The messages may include active messages and passive messages. An active message may be a message that may be automatically delivered from virtual objects of the augmented reality display to a user, irrespective of whether an interest or a user expression of interest in the virtual objects may be detected. A passive message may be a message that may be delivered from virtual objects of the augmented reality display to a user as a response to an interest or a user expression of interest in the virtual objects being detected (e.g., selection by way of user input). A passive message may be generated by the user selecting a virtual object in order to inform the user that the augmented reality system may be recognizing the user selection.

Active messages may be provided from virtual objects 512, 514, 516, 520a-e, 522a-b, and/or 520al-a4 and delivered to the user on the augmented reality display 510. The virtual objects 512-514 including the active messages may be stored in the virtual object repository 230. Further, passive messages may be generated based on a user input and delivered to the user on the augmented reality display 510. By way of example, a passive message may be a response from one of virtual objects 512, 514, 516, 520a-e, 522a-b, and/or 520al-a4 in response to a user input related to virtual objects 512, 514, 516, 520a-e, 522a-b, and/or 520al-a4. The virtual objects 512, 514, 516, 520a-e, 522a-b, and/or 520al-a4 including associated passive messages may be stored in the virtual object repository 230.

Although, in some embodiments, the active and passive messages may be provided by virtual objects 512, 514, 516, 520a-e, 522a-b, and/or 520al-a4 and stored with such virtual objects in the virtual object repository 230, in some embodiments, the active and passive messages may be associated with virtual objects 512, 514, 516, 520a-e, 522a-b, and/or 520al-a4 by the augmented reality engine 250. For example, the active and passive messages may be stored in a repository separate from virtual object repository 230. The augmented reality engine 250 may retrieve the active and passive messages related to virtual objects 512, 514, 516, 520a-e, 522a-b, and/or 520a1-a4 from the separate repository and combine them with the virtual objects 512, 514, 516, 520a-e, 522a-b, and/or 520al-a4.

The augmented reality engine 250 may cause any of the virtual objects 512, 514, 516, 520a-e, 522a-b, and/or 520al-a4 to transition from one state to another state, and back again. For example, the augmented reality engine 250 may cause the virtual object 514 to transition from the first state to the second state, and from the second state to the first state. The state change may be continuous or discontinuous. The transition from one state to another may be based on (e.g., occur responsive to) whether interest or user expression of interest in the virtual objects 512, 514, 516, 520a-e, 522a-b, and/or 520al-a4 may be detected.

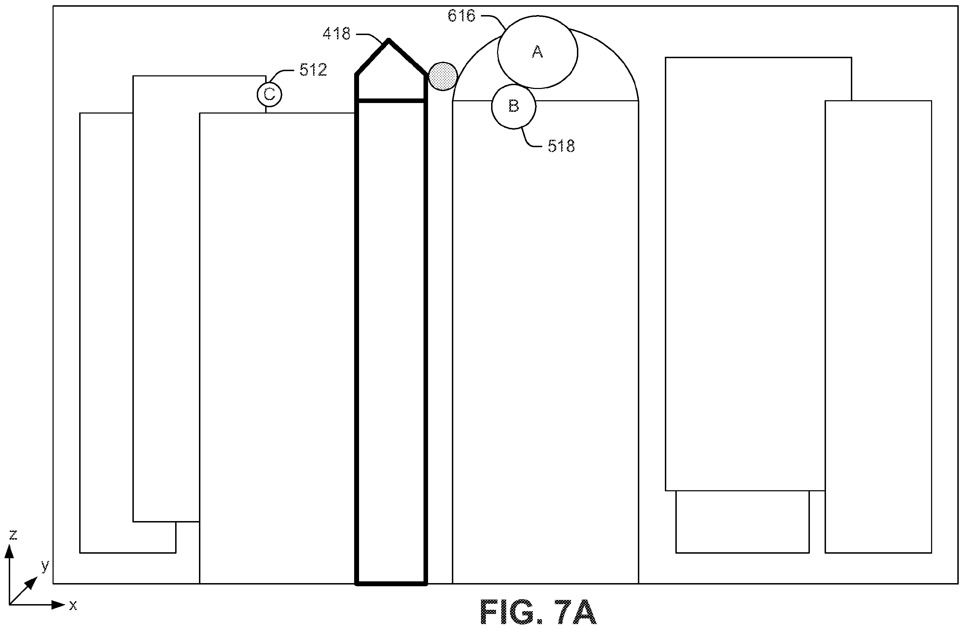

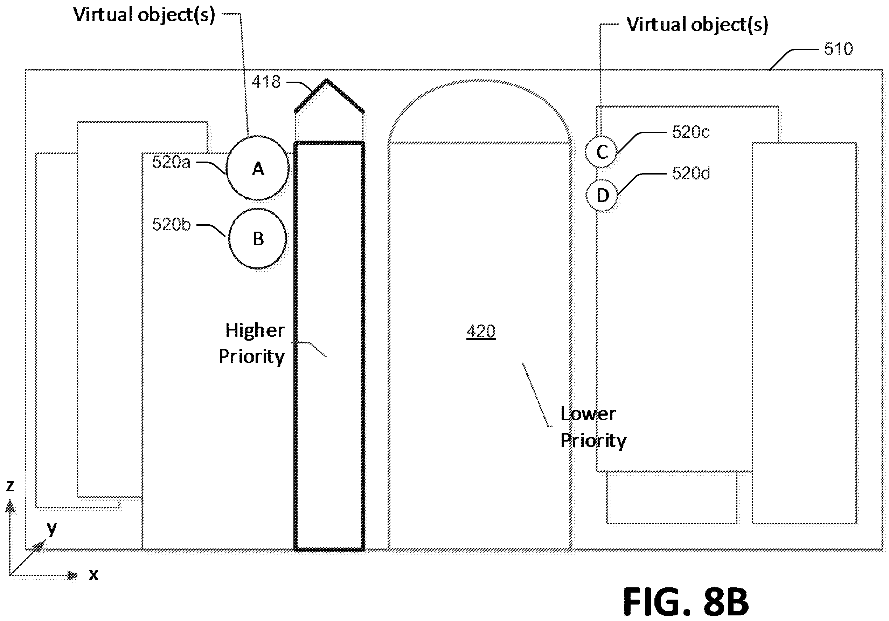

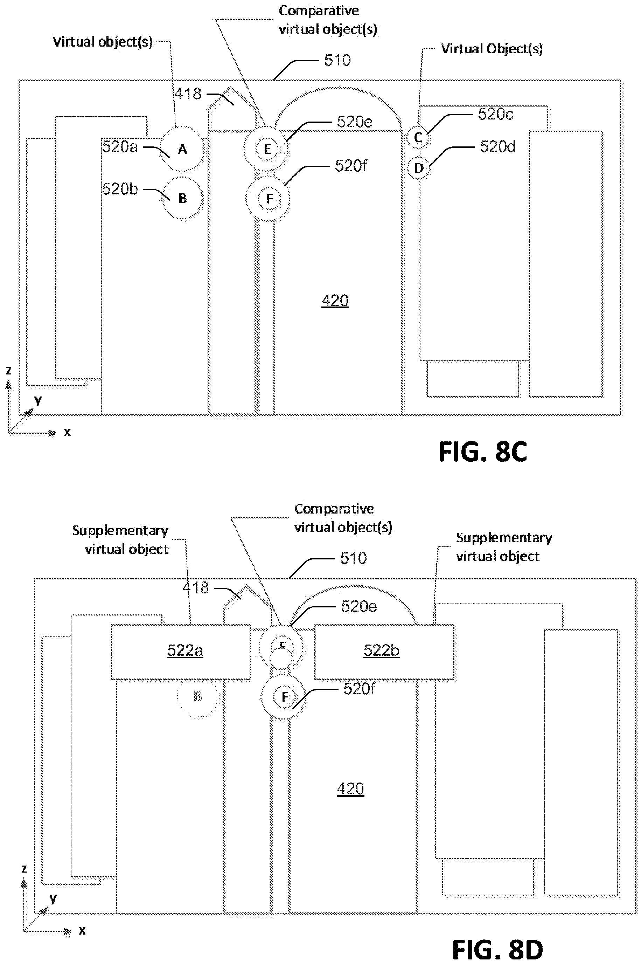

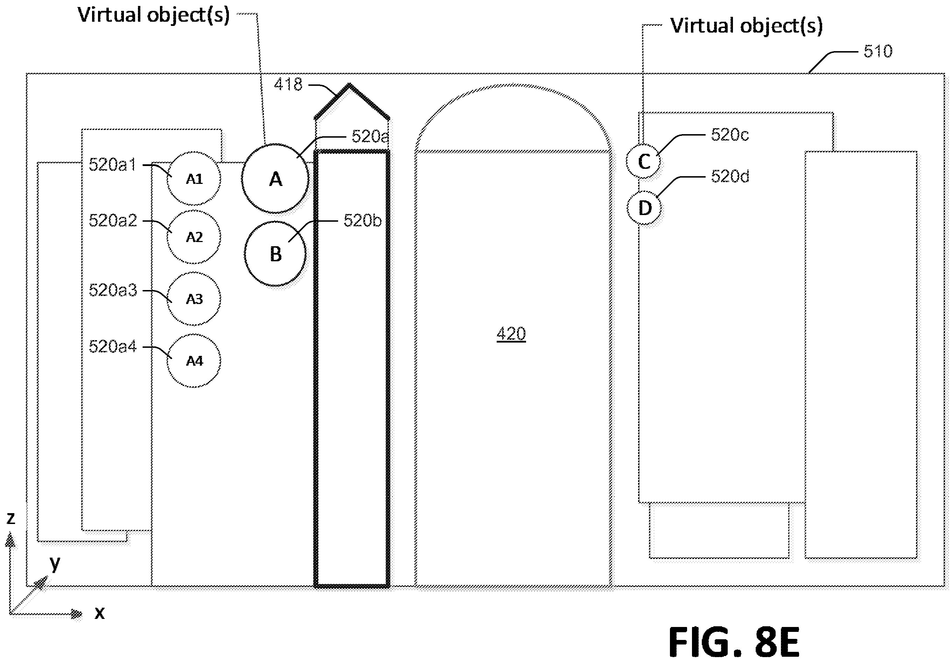

The augmented reality engine 250 may obtain from user recognition unit 210 an interest indication in any of the virtual objects such as the virtual objects 512-516, and revise the augmented reality display 510 accordingly. In some embodiments, the augmented reality engine 250 may cause the virtual object 514 to transition from a compact state, such as illustrated in Figure 6, to a non-compact state, such as illustrated Figure 7A, by expanding (e.g., growing in size) from the compact state. The augmented reality engine 250 may carry out this transition when an interest indication in the virtual object 514 may be detected and/or can be inferred. The augmented reality engine 250 may also cause the state to change of the virtual objects to change as shown in Figure 8B and Figure 8E and/or Figure 8C and Figure 8D in examples as described herein.

In some embodiments, the augmented reality engine 250 may cause the virtual object 514 to transition from a non-compact state, such as illustrated in Figure 7A, to a compact state, such as illustrated Figure 6, by reducing (e.g., shrinking in size) back to the compact state. The augmented reality engine 250 may carry out this transition for example, when no indication of interest in the virtual object 514 may be detected and/or can be inferred. The augmented reality engine 250 may also cause the state to change of the virtual objects to change as shown in Figure 8B and Figure 8E and/or Figure 8C and Figure 8D in examples as described herein.

The interest indication may have values ("interest-indication values") commensurate with varying degrees of interest, such as, for example "minimally interested", "somewhat interested", "fully interested", etc. As an example, the interest-indication values may be based on (e.g., scale with corresponding values on) a sliding scale that has "minimally interested" towards one end to "fully interested" towards the other end with various intermediate degrees of interest in-between. The augmented reality engine 250 may use the interest-indication values to control expansion (growth and/or shrinkage) of the virtual object 514 or other virtual objects while in the second state.

In some embodiments, the augmented reality engine 250 may cause the virtual object 514 to switch to a partially or fully enlarged state, such as illustrated in Figures 7A-7B, from a compact state. The augmented reality engine 250 may carry out such transition when, for example, an interest indication in the virtual object 514 may be detected and/or can be inferred. In some embodiments, the augmented reality engine 250 may cause the virtual object 514 to switch from the partially or fully enlarged state to the compact state when, for example, no interest indication in the virtual object 514 may be detected and/or can be inferred. The augmented reality engine 250 may also cause the state to change of the virtual objects to change as shown in Figure 8B and Figure 8E and/or Figure 8C and Figure 8D in examples as described herein.

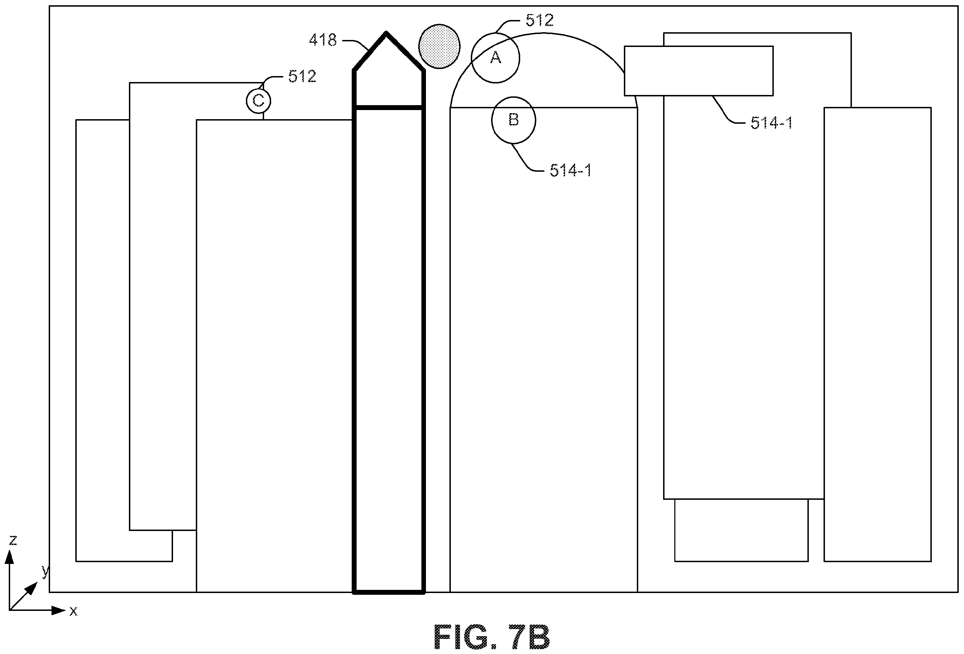

In some embodiments, the augmented reality engine 250 may cause the virtual object 514 to transition from a compact state, such as illustrated in Figure 6, to a non-compact state, such as illustrated in Figure 7B, by appending or otherwise adding a supplementary virtual object 514-1. The augmented reality engine 250 may carry out this transition when an interest indication in the virtual object 514 may be detected and/or can be inferred. In some embodiments, the augmented reality engine 250 may cause the virtual object 514 to transition from the non-compact state, such as illustrated in Figure 7B, to the compact state by returning back to (e.g., removing the supplementary virtual object 514-1 from) the non-compact state. The augmented reality engine 250 may carry out this transition when, for example, no interest indication in the virtual object 514 may be detected and/or can be inferred. The augmented reality engine 250 may also cause the state to change of the virtual objects to change and/or a transition to occur as shown in Figure 8B and Figure 8E and/or Figure 8C and Figure 8D in examples as described herein.

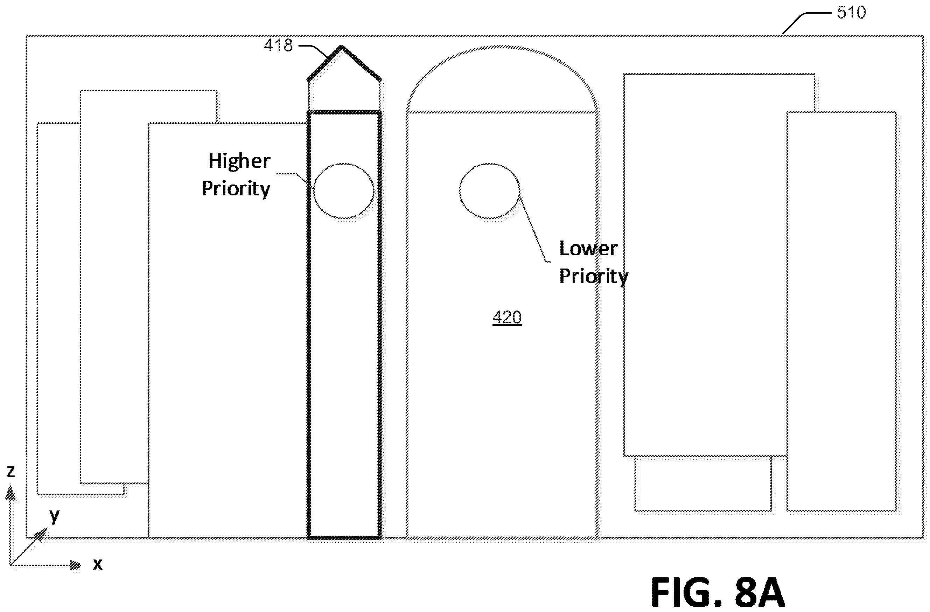

According to examples herein, priority may be used to determine what information may be output or provided on an augmented reality display or interface. In an embodiment, one or more objects that may be identified in a scene as being of interest to a user may be prioritized based on the level of the user's interest as shown in Figures 8A-8E. For example, a user may gaze at a real world object 418 and/or 420 in the augmented reality display 510. The user may focus on the real world object 418 (e.g., may fixate or gaze thereon) longer over a specified short interval than other real world objects such as the real world object 420, for example. The user recognition unit 210 may detect such a gaze and/or the ROI determining unit 220 may determine which real world object the user may be fixated or gazing upon as described herein. A priority may be assigned (e.g., by the augmented reality unit 200) based on the user focusing on one real world object over another real world object. For example, the real world object 418 may be given or assigned a higher priority than another object such as the real world object 420. The augmented reality engine 250 may determine and/or provide or display information based on the priorities for the objects. For example, information such as virtual objects 520a-d may be displayed for higher priority real world objects such as the real world object 418, but not for lower priority objects such as the real world object 420 and/or virtual objects 520a-d may be displayed for each of the real world objects 418, 420 with the higher priority object being given a different identifier, level or degree of highlighting, or another representation that may be of interest to identify it as being more relevant, and/or the like. To determine a priority, in an example, the augmented reality unit 210 and/or the components therein such as the user recognition unit 210, the ROI determining unit 220, and/or the augmented reality unit 250 may determine or find objects that a user may have fixated on while viewing a scene as described herein. The augmented reality unit 210 and/or the components therein may sort those objects based on a time of fixation (e.g., how long the user may have looked at the object in the scene). According to an example, the augmented reality unit 210 and/or the components therein may use the sorted list to display one or more of the objects (e.g., using the augmented reality unit 250) such as those with the highest priority and/or display each of the objects with different identifiers, levels or degrees of highlighting, or other representation of interest. In examples, selecting a portion of real world objects to display virtual objects associated therewith based on priority may enhance a user's experience.

In one embodiment, the objects may be given a "fading out" effect based on the passage of time since the last fixation on them by the user. For example, the user may gaze at two real world objects 418, 420 to compare their features (e.g., age, architecture, and/or the like), at two movie stars to compare information about their careers, at three restaurants to compare their menus, prices, or wait times, and/or the like. A higher priority may be assigned to the most recent object the user may gaze upon. For example, a higher priority may be assigned to the real world object 418 than the real world object 420 if the user's most recent gaze may be on the real world object 418. As such, more than one object may be highlighted with the most recent one being more prominent according to examples.

In an example, to sort the objects and/or determine a priority of an object, duration and/or recency of a user's saccadic eye movements may be captured, for example, by the augmented reality unit 210 as described herein. According to an embodiment, the duration and/or recency may be stored as shown in Table 1 below (e.g., in the first two columns thereof).

**Table 1**

| **Gaze Fixation** | **Fixation Duration** | **Selected (Highlighted) Object** |
|---|---|---|
| P5 | 10000 ms | P5 High |
| P4 | 4000 ms | P5 High; P4 Medium |
| P5 | 3000 ms | P5 High; P4 Medium |
| P3 | 1000 ms | P4 High; P5 Medium; P3 Low |
| P1 | 1000 ms | P5 High; P1 Medium; P3 Low |
| P5 | 7000 ms | P5 High; P1 Medium; P3 Low |
| P4 | 2000 ms | P5 High; P4 Medium; P1 Low |
| P5 | 2000 ms | P5 High; P4 Medium; P1 Low |

Table 1 illustrates an example of a user's saccadic eye movements showing the amounts of time the user's gaze has rested on different objects (e.g., P4 and P5 which may represent the real world objects 418, 420 for example) and resulting highlighting as displayed by examples herein. The eye movements and resulting highlighting shown in Table 1 may be associated with the priority as described herein. According to the example shown in Table 1, the augmented reality unit 210 may determine which objects to highlight using different levels of interest (e.g., or priorities) such as none, low, medium, high on a particular real world object. For example, the user may gaze on a real world object associated with P1 and P3-P5 for the duration recorded, a priority or level of interest may be assigned based on the associated duration of fixation compared to other objects and that may be stored in the selected or highlighting portion of the table as shown.

Table 1 may show a way to take into account the duration of fixation in the salient fixation window and/or the recency of the fixation. As shown, in an example, a smaller fixation in the recent past may be more important than a larger fixation in the distant past. In embodiments, the most viewed objects such as the top two or three real world objects that may be viewed may have virtual objects such as 520a-e (e.g., where 520e-f may show a comparison of features, information, and/or the like with supplemental virtual objects 522a-b between real world objects such as the real world objects 418, 420) displayed by one or more of the following: outlining their silhouettes, altering the color of the area on the screen where they may appear, altering the color of the area within the object (e.g., giving an object a red glow), increasing their brightness or contrast relative to other objects, and/or the like.

In one example, using the above knowledge of priority, the augmented reality unit 210, for example, using the augmented reality engine 250 may determine the augmentation information such as virtual objects 520a-e (e.g., and/or 522a-b) to make prominent by intersecting the available augmentation information items for the selected objects (of approximately equal priority). According to an example (e.g., as shown in Figures 8B-8C), if a user gazes back and forth between two real world objects 418, 420 such as two restaurants, augmentation information such as virtual objects 520a-d and/or augmentation information that may provide a comparison of the real world objects 418, 420 such as virtual objects 520e-f may be displayed (e.g., as it may be useful in making a comparison between them). For example, their cuisine, price, wait time, review summaries, child friendliness, and/or the like may be suitable to display for both objects. Other augmentation information that may not apply to at least two of the objects that may be selected based on priority as described herein may not be made as prominent. For example, if special deals may be known for one but not the other, such deals may be less relevant in making a comparison and may or not be displayed (e.g., they may remain visible since the user may care about such information items or they may not be displayed). As shown, in an example, the augmentation information such as the virtual objects 520a-b may be displayed more prominently for the real world object 418 that may have a higher priority and/or comparison information such as the virtual objects 520e-f for the real world objects 418, 420 than the augmentation information such as the virtual objects 520c-d for the real world object 420.

In one embodiment, using the above knowledge of priority, the augmented reality unit 210 and/or augmented reality engine 250 therein may determine placement of the augmentation information (e.g., the virtual objects 520a, 520b, 520c, 520d, 520e and/or 520f) such that the information may not occlude other objects (e.g., other interesting objects that may be lower-rated in terms of user interest). For example, if the user may view two restaurants or two celebrities such as Brad Pitt and Angelina Jolie together, the user may not want the augmentation information about one to cover up part of the real world object of the other such as the restaurant building or the face of the other.

In examples herein, a "comparison gesture" may be defined and/or used by the augmented reality unit 210 and/or the augmented reality engine 250. The comparison gesture may be defined and/or may include a gesture of a user fixating on some objects such that the user may look at them quickly and repeatedly to indicate that they comparison between them may be salient. For example, the user can fixate at X (e.g., a location of one real world object such as real world object 418) and Y (e.g., a location of another real world object such as real world object 420) and may, for example, quickly look at them as X-Y-X. From such a gesture, the augmented reality unit 210 and/or the augmented reality engine 250 may determine the intersecting augmentation information items as relevant and/or having a priority associated there with.

According to examples herein (e.g., once the augmented reality unit 210 and/or the augmented reality engine 250 therein may have determined the augmentation information items as relevant to a comparison and/or based on a priority), virtual objects such as virtual 520a, 520b, 520c, 520d, 520e, and/or 520f (e.g., as shown in Figures 8B-8E) representing the augmentation information item may be displayed in a location as described herein. In an example (e.g., as shown in FIG. 8D), the augmented information may be expanded to display additional information and/or additional objects or virtual objects that may be selected (e.g., as shown by 522a-b and/or 520a1-a4). For example, when a user gazes at a virtual object such as virtual object 520e, the augmented reality unit 210 including one or of the components therein such as the user recognition unit 210, ROI determining unit 220, and/or the augmented reality unit 250 may determine object the user may be gazing at, may determine the real world objects it may be associated therewith or a comparison thereto and/or a priority thereof. A virtual object such as virtual object 520e (e.g., as shown in FIG. 8D) may be expanded by the augmented reality unit 210 and/or the components thereof into boxes or areas 522a-b such as two or more parallel boxes that may show the corresponding augmentation information for each of the objects being compared.

For example, if the user may be comparing two restaurants and/or two celebrities such as Brad Pitt and Angelina Jolie, the augmentation reality engine 250 may display virtual objects 524, 525 corresponding to for restaurants their types, cuisines, common menu items, reviews, and/or the like as described herein and/or for celebrities their age, greatest movies, first movie, and current projects. The common virtual objects or comparison virtual objects such as the virtual objects 520e-f may be displayed in various ways including one or more of the following: in the middle of or overlaying the objects being compared, via combinations of colors, double barring, dashes, texture, via callouts linked to the objects being compared, and/or the like. The user may view or look at one of the virtual objects such as the virtual object 520e to cause the augmented reality unit 210 and/or the augmented reality engine 250 and/or other components therein may display additional information in the boxes or areas 522a-b as shown in FIG. 8D, for example.

In one embodiment, an identified or selected virtual object such as virtual object 520a (e.g., as shown in Figure 8E) may have a "geometric structure" with multiple "components" such as components 520al-a4 associated therewith that may be displayed. For example, a building may have components for different floors, groups of floors, or windows. Similarly, a bridge may have different spans or pillars. A human face may have features. In an example, an information source for such real world objects such as the real world object 418 associated with the virtual object 520 may include information specific to these components and the user recognition unit 210 (e.g., using the vision or eye module 260 as described herein) may recognize these components such that the augmented reality unit 210 and/or the components therein may perform one or more of the following: initially select augmentation information about the identified object to cover each of its components, may present the augmentation information via icons places in proximity to the corresponding components, when the user interacts with the icons as described before the corresponding augmentation information may be elaborated (e.g., addition information for the components 520al-a4 may be displayed).

According to an example, a user can either scan through the various components such as the components 520al-a4 to select one of interest or if the user m the relevant component, the user may gaze or look in its proximity. For example, if a user may be interested in the section of ta building that may have suffered a collapse, the information for that section would be easier for the user to find than otherwise using the examples herein (e.g., by gazing at the component and/or virtual object associated therewith).

As described herein, in some embodiments, the user may make a user input related to the virtual object 514 or the other virtual objects 512, 516, 520a-e, 522a-b, and/or 520al-a4 in Figures 4-8 on augmented reality display 510 displayed on a computing device. The user input may be a user selection of the virtual object by and/or through touching, clicking, drag-and-dropping, gazing at, voice/speech recognition and/or other interaction with display unit 300 in connection with the virtual object of the augmented reality display 510 displayed on display unit 300. If the user input may be made, a passive message which has numerical data such as x, y and z coordinates of virtual object of augmented reality image 510 may be generated based on a location (x, y, z) of the user selection of virtual object 514 and/or other virtual objects 512, 516, 520a-e, 522a-b, and/or 520a1-a4. Then, the augmented reality engine 250 may receive the passive message generated from virtual object 514 and/or other virtual objects 512, 516, 520a-e, 522a-b, and/or 520al-a4. The passive message may be an internal data structure for communication between a user and virtual objects, and thus the passive message may not be displayed on the augmented reality display.

In certain representative embodiments, the region of interest may be highlighted. The highlighting may be via color, texture, or brightness, for instance. In some embodiments, the augmentation information may be organized in a list format. In certain representative embodiments, the augmentation information may be organized in a non-linear pattern. In certain representative embodiments, the augmentation information may be displayed in a subdued format. In certain representative embodiments, the augmentation information may be displayed in a more prominent format responsive to an interest indication in a virtual object such as the virtual object 514 and/or the other virtual objects 512, 516, 520a-e, 522a-b, and/or 520al-a4 in Figures 4-8 being detected and/or being inferred (e.g., responsive to the eye tracking system 260 indicating a user's gaze may be approaching the virtual object such as the virtual object 514, 520a, and/or 520e).

In certain representative embodiments, the augmentation information may be displayed with constant prominence. In certain representative embodiments, the augmentation information may be displayed in a given color. In certain representative embodiments, the color may become darker responsive to an interest indication in a virtual object such as the virtual object 514 and/or the other virtual objects 512, 516, 520a-e, 522a-b, and/or 520al-a4 in Figures 4-8 being detected and/or being inferred (e.g., responsive to the eye tracking system 260 indicating a user's gaze may be approaching the virtual object such as the virtual object 514 and/or 512, 516, 520a-e, 522a-b, and/or 520al-a4). In certain representative embodiments, the color may become lighter responsive to an interest indication in the virtual object such as the virtual object 514 and/or the other virtual objects in Figures 4-8 being detected and/or being inferred (e.g., responsive to the eye tracking system 260 indicating a user's gaze may be approaching the virtual object such as the virtual object 514 and/or 512, 516, 520a-e, 522a-b, and/or 520al-a4).

In certain representative embodiments, the augmentation information may be displayed at a given size. In certain representative embodiments, the size may become larger responsive to an interest indication in a virtual object such as the virtual object 514 and/or the other virtual objects 512, 516, 520a-e, 522a-b, and/or 520al-a4 in Figures 4-8 being detected and/or being inferred (e.g., responsive to the eye tracking system 260 indicating a user's gaze may be approaching the virtual object such as the virtual object 514 and/or 512, 516, 520a-e, 522a-b, and/or 520al-a4). In certain representative embodiments, the size may grow in proportion to distance. In certain representative embodiments, the size may become smaller responsive an interest indication in the virtual object 514 and/or other virtual objects 512, 516, 520a-e, 522a-b, and/or 520al-a4 being detected and/or being inferred (e.g., responsive to the eye tracking system 260 indicating a user's gaze may be approaching the virtual object such as the virtual object 514 and/or 512, 516, 520a-e, 522a-b, and/or 520al-a4). In certain representative embodiments, the size may shrink in proportion to distance.

Each of the other virtual objects 512, 516, 520a-e, 522a-b, and/or 520al-a4, like the virtual object 514, may have a plurality of states for presenting respective presentation types of the augmentation information. And although not shown, each of the virtual objects 512, 516, 520a-e, 522a-b, and/or 520al-a4 may behave in the same manner as the virtual object 514 with respect to presenting the different presentation types of the augmentation information. Each of the virtual objects 512, 516, 520a-e, 522a-b, and/or 520al-a4may behave in different ways, as well.

In Figures 5-8, although virtual objects 512-516 and 520-525 may displayed on augmented reality display 510, the number of virtual objects capable of being displayed on the augmented reality display 510 may not be limited thereto. Further, although an x-axis, a y-axis, and a z-axis are shown on the augmented reality display 510 in Figures 5-8, they may not be displayed on display unit 300.

The spatial attributes may include a first spatial component, a second spatial component and a third spatial component. For example, the first spatial component may be an x-coordinate of a virtual object, the second spatial component may be a y-coordinate of the virtual object, and the third spatial component may a z-coordinate of the virtual object. Although the first, second, and third spatial components are described to be the x-coordinate, y-coordinate and z-coordinate, respectively, they are nothing more than an example and are not limited thereto.

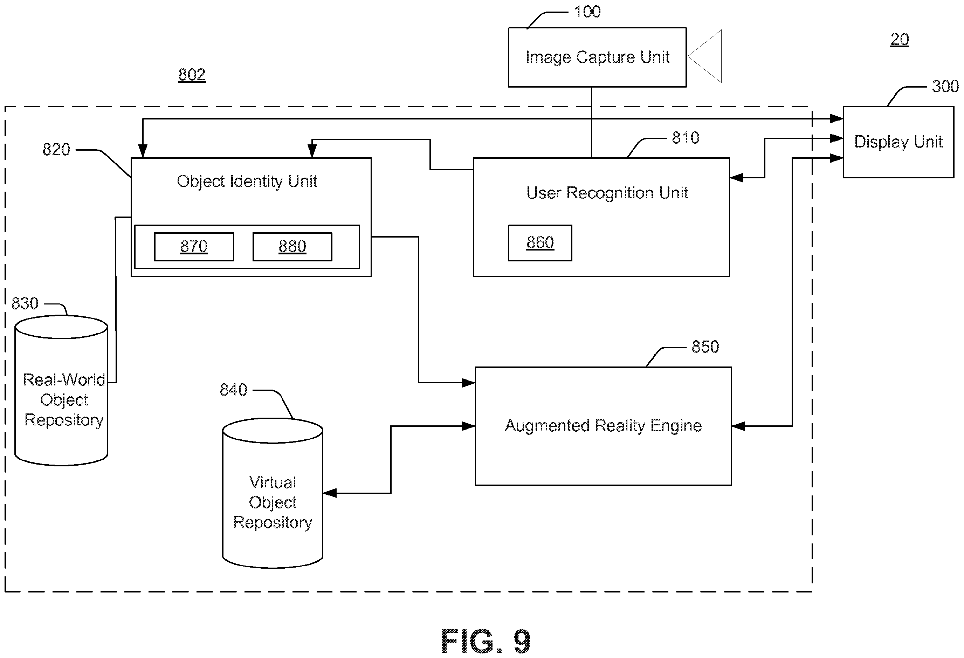

Figure 9 is a block diagram illustrating an example of an augmented reality system 20 in accordance with at least some embodiments described herein. The augmented reality system 20 may be used and/or implemented in a computing device. The augmented reality system 20 will be described below with reference to illustrative example images shown in Figures 4-8. The augmented reality system 20 of Figure 9 may be similar to the augmented reality system 10 of Figure 3, except as described herein below. The augmented reality system 20 may include an augmented reality unit 800 along with the image capture unit 100 and the display unit 300.

The augmented reality unit 800 may generate augmented reality displays, and provide the generated augmented reality displays to the display unit 300. The augmented reality unit 800 may include a user recognition unit 810, an object identification unit 820, a real-world object repository 830, a virtual object repository 840 and an augmented reality engine 850.

The user recognition unit 810 may recognize user inputs related to real-world views and/or augmented reality displays. The user recognition unit 810, for example, may recognize user inputs related to any of the (displayed and/or captured) real-world view 410; augmented reality display 510; real-world objects depicted in the real-world view 410 and augmented reality display 510, such as, the real-world objects 412-426; and virtual objects depicted in the real-world view 410 and augmented reality display, such as, the virtual objects 512, 514 516, 520a-e, 522a-b, and/or 520a1-a4. The user inputs may be provided, as appropriate, to display unit 300 and/or to the augmented reality unit 800, including, for example, the object identification unit 820 and the augmented reality engine 850.

Among the user inputs that the user recognition unit 210 may recognize may be a user input that may be indicative of the user's designation or a user expression of designation of the designated position 428 on the displayed real-world view 410 and/or the augmented reality display 510. Also among the user inputs that the user recognition unit 210 may recognize may be a user input that includes an interest indication in one or more of the virtual objects depicted in the augmented reality display 510.

The user recognition unit 810 may recognize user inputs provided by one or more input device technologies. The user recognition unit 810, for example, may recognize user inputs or selections made by and/or through touching, clicking, drag-and-dropping, gazing at, voice/speech recognition and/or other interaction in connection with the real-world view 410 and/or the augmented reality display 510 displayed on display unit 300. The user recognition unit 810 may recognize the user inputs provided from any of a touchscreen or other like type device; a system that recognizes interaction between a finger tip of the user captured by a camera and the display unit 300; the eye tracking unit 260, and the like. Details of a user recognition unit, which may be representative of the user recognition unit 810, are described above in connection with the user recognition unit 210.

Any of the user inputs indicating an interest in one (or more) of the real-world objects 412-426 may include a location (e.g., one or more sets of coordinates) associated with the displayed real-world view 410. Any of the user inputs indicating an interest in one or more of the virtual objects 512, 514 516, 520a-e, 522a-b or the components thereof such as 520al-a4 (e.g., which may be virtual objects such as supplementary virtual objects) may include a location (e.g., one or more sets of coordinates) associated with the displayed augmented reality image 510.

The object identification unit 820 may identify real-world objects associated with the displayed real-world views and/or augmented reality displays. The object identification unit 820, for example, may obtain the designated position 428 (e.g., focus area) on the displayed real-world view 410 and/or the augmented reality display 510 from the user recognition unit 210, and use the designated position 428 to identify the real-world object 418.

The object identification unit 820 may include an object recognition unit 870 and a depth recognition unit 880. The object recognition unit 870 may perform object detection on real-world view. The object recognition unit 870, for example, may perform object detection on the real-world view 410 using the designated position 428 and obtain a representative real-world object of the real-world object 418. The object recognition unit 870 may use any of various known technical methodologies for performing the object detection, including, for example, edge detection, primal sketch, changes in viewing direction, changes in luminosity and color, etc.

The depth recognition unit 880 may obtain spatial attributes of a capture (e.g., a snapshot of) the real-world view. The depth recognition unit 880, for example, may determine a real-world and/or localized map location for the representative real-world object. The depth recognition unit 280 may determine a representative-real-world-object position, and determine a real-world and/or localized map location for the portion of the representative real-world object based on the representative-real-world-object position. In some embodiments, the depth recognition unit 280 may translate the representative-real-world-object position to a real-world and/or a localized map location for the determined portion of the representative real-world object.

In some embodiments, the depth recognition unit 280 may determine the representative-real-world-object position, and/or determine the corresponding real-world and/or localized map location as follows. The depth recognition unit 280 may calculate x, y and z axes for the real-world view 410, and obtain a set of x, y and z coordinates for the representative real-world object. To obtain the x, y and z axes and the set of x, y and z coordinates, the depth recognition unit 880 may use a location recognition algorithm. The location recognition algorithm used may be an algorithm that may be well known in the art, and may be implemented without the need for further explanation herein. Although not shown, the depth recognition unit 880 may obtain and use positioning information for mapping the x, y and z axes to real world coordinates and/or for mapping the set of x, y and z coordinates for the representative real-world object to a set of real world coordinates. The positioning information may be obtained from a global position system (GPS) receiver (not shown) communicatively coupled to the augmented reality unit 800 and/or via network assistance.

The object identification unit 820 may use the set of x, y and z coordinates and/or the set of real world coordinates associated with the representative real-world object to query the real-world object repository 830 for an identity of the real-world object.

The real-world object repository 830 may store identities of real-world objects. The identities of the real-world objects may be stored in association with (e.g., indexed by) corresponding sets of x, y and z coordinates and/or sets of real world coordinates. The real-world object repository 830, for example, may retrieve the identity of the real-world object using the set of x, y and z coordinates and/or the set of real world coordinates passed to it in the query. The real-world object repository 830 may provide the retrieved identity to the object identification unit 820 in response to the query. The object identification unit 820 may provide the retrieved identity to the augmented reality engine 850.

The identity of the real-world object may include (or be) an identifier. The identifier may be any of a name of the real-world object, coordinates associated with the real-world object, etc.

The augmented reality engine 850 may generate augmented reality displays, and/or provide the augmented reality displays to the display unit 300. The augmented reality engine 850, for example, may generate the augmented reality display 510. To facilitate generating the augmented reality display 510, the augmented reality engine 850 may use the obtained identity of the real-world object to query the virtual object repository 840.

The virtual object repository 840 may store virtual objects for presenting augmentation information in connection with identified real-world objects. The virtual object repository 840, for example, may store the virtual objects 512, 514 516, 520a-e, 522a-b or the components thereof such as 520al-a4 (e.g., which may be virtual objects such as supplementary virtual objects). The virtual objects 512, 514 516, 520a-e, 522a-b or the components thereof such as 520al-a4 (e.g., which may be virtual objects such as supplementary virtual objects) and any other virtual objects associated with a real-world object may be stored in association with (e.g., indexed by) the identity of the real-world object.

For example, the virtual object repository 840 may also store virtual objects associated with the real-world objects 412, 414, 418, 416, 420, 422, 424 and 426 and/or other virtual objects associated with the real-world object 418. Each of the virtual objects associated with the real-world objects 412, 414, 416, 418, 420, 422, 424 and 426 may be stored in association with (e.g., indexed by) an identity of one or more of the real-world objects 412, 414, 416, 418, 420, 422, 424 and 426.

The virtual object repository 840, for example, may retrieve the virtual objects 512, 514 516, 520a-e, 522a-b or the components thereof such as 520al-a4 (e.g., which may be virtual objects such as supplementary virtual objects using the identity of the real-world object passed to it in the query. The virtual object repository 840 may provide the retrieved the virtual objects 512, 514 516, 520a-e, 522a-b or the components thereof such as 520al-a4 (e.g., which may be virtual objects such as supplementary virtual objects) to the augmented reality engine 850 in response to the query.

The augmented reality engine 850 may generate the augmented reality display 510 by combining the on-going real-world view 410 and the virtual objects 512, 514 516, 520a-e, 522a-b or the components thereof such as 520al-a4 (e.g., which may be virtual objects such as supplementary virtual objects). The virtual objects 512, 514 516, 520a-e, 522a-b or the components thereof such as 520al-a4 (e.g., which may be virtual objects such as supplementary virtual objects) may be arranged at any number of positions within the augmented reality display 510. For example, the virtual objects 512, 514 516, 520a-e, 522a-b or the components thereof such as 520al-a4 (e.g., which may be virtual objects such as supplementary virtual objects) may be arranged at positions in a vicinity of the real-world object 418. The virtual objects 512, 514 516, 520a-e, 522a-b or the components thereof such as 520al-a4 (e.g., which may be virtual objects such as supplementary virtual objects) may be arranged at positions proximate to the real-world object 418. Arranging the virtual objects 512, 514 516, 520a-e, 522a-b or the components thereof such as 520al-a4 in close proximity to the region of interest may reduce a distance the user's eyes travel to focus on the augmentation information. The virtual objects 512, 514 516, 520a-e, 522a-b or the components thereof such as 520al-a4 may be arranged at positions proximate to the designated position 428 and within a vicinity of the real-world object 418.

The virtual objects 512, 514 516, 520a-e, 522a-b or the components thereof such as 520a1-a4 may be arranged at positions proximate to the designated position and adjacent to the real-world object 418 respectively. The virtual objects 512, 514 516, 520a-e, 522a-b or the components thereof such as 520al-a4 may be arranged at positions so as not occlude one or more of the real-world objects 412-426. The virtual objects 512, 514 516, 520a-e, 522a-b or the components thereof such as 520al-a4 or the components thereof such as 520a-d may be arranged at positions so as not occlude each other or another virtual object. The virtual objects 512, 514 516, 520a-e, 522a-b or the components thereof such as 520al-a4 may be arranged at positions to occlude other objects (real-world or otherwise) outside the region of interest.

The virtual objects 512, 514 516, 520a-e, 522a-b or the components thereof such as 520a1-a4 may be arranged at positions based on distances between the user and the virtual objects 512, 514 516, and/or 520a-e. For example, some of virtual objects virtual objects 512, 514 516, 520a-e, 522a-b or the components thereof such as 520al-a4 at smaller (nearer) distances from the user may be displayed on augmented reality image 510 larger than others of virtual objects 512, 514 516, 520a-e, 522a-b or the components thereof such as 520al-a4 at larger (further) distances from the user.

The augmented reality engine 850 may cause any of the virtual objects 512, 514 516, 520a-e, 522a-b or the components thereof such as 520al-a4 to transition from one state to another state, and back again. For example, the augmented reality engine 850 may cause the virtual object 514 to transition from the first state to the second state, and from the second state to the first state. The state change may be continuous or discontinuous. The transition from one state to another may be based on (e.g., occur responsive to) whether interest or user expression of interest in the virtual objects 512, 514 516, 520a-e, 522a-b or the components thereof such as 520al-a4 may be detected.

The augmented reality engine 850 may obtain from user recognition unit 210 an interest indication in any of the virtual objects 512, 514 516, 520a-e, 522a-b or the components thereof such as 520al-a4, and revise the augmented reality display 510 accordingly. In some embodiments, the augmented reality engine 850 may cause the virtual object 514 to transition from a compact state, such as illustrated in Figure 6, to a non-compact state, such as illustrated Figure 7A, by expanding (e.g., growing in size) from the compact state. The augmented reality engine 850 may carry out this transition when an interest indication in the virtual object 514 may be detected and/or can be inferred. The augmented reality engine 250 may also cause the state to change of the virtual objects to change as shown in Figure 8B and Figure 8E and/or Figure 8C and Figure 8D in examples as described herein.

In some embodiments, the augmented reality engine 850 may cause the virtual object 514 (e.g., as an example) to transition from a non-compact state, such as illustrated in Figure 7A, to a compact state, such as illustrated Figure 6, by reducing (e.g., shrinking in size) back to the compact state. The augmented reality engine 850 may carry out this transition for example, when no indication of interest in the virtual object 514 may be detected and/or can be inferred. The augmented reality engine 850 may use the interest-indication values to control expansion (growth and/or shrinkage) of the virtual object 514 while in the second state. The augmented reality engine 250 may also cause the state to change of the virtual objects to change as shown in Figure 8B and Figure 8E and/or Figure 8C and Figure 8D in examples as described herein.

In some embodiments, the augmented reality engine 850 may cause the virtual object 514 to switch to a partially or fully enlarged state, such as illustrated in Figures 7A-7B and/or 8A-8E, from a compact state. The augmented reality engine 850 may carry out such transition when, for example, an interest indication in the virtual object 514 may be detected and/or can be inferred. In some embodiments, the augmented reality engine 850 may cause the virtual object 514 to switch from the partially or fully enlarged state to the compact state when, for example, no interest indication in the virtual object 514 may be detected and/or can be inferred. The augmented reality engine 250 may also cause the state to change of the virtual objects to change as shown in Figure 8B and Figure 8E and/or Figure 8C and Figure 8D in examples as described herein.

In some embodiments, the augmented reality engine 850 may cause the virtual object 514 to transition from a compact state, such as illustrated in Figure 6, to a non-compact state, such as illustrated in Figure 7B, by appending or otherwise adding a supplementary virtual object 514-1. The augmented reality engine 850 may carry out this transition when an interest indication in the virtual object 514 may be detected and/or can be inferred. In some embodiments, the augmented reality engine 850 may cause the virtual object 514 to transition from the non-compact state, such as illustrated in Figure 7B, to the compact state by returning back to (e.g., removing the supplementary virtual object 514-1 from) the non-compact state. The augmented reality engine 850 may carry out this transition when, for example, no interest indication in the virtual object 514 may be detected and/or can be inferred. The augmented reality engine 250 may also cause the state to change of the virtual objects to change as shown in Figure 8B and Figure 8E and/or Figure 8C and Figure 8D in examples as described herein.

The augmented reality unit 810 and/or the components thereof may also use a priority to display virtual objects such as the virtual objects 512-516 and/or 520-525 or the components thereof such as 520a-d as described herein.

In some embodiments, as described herein, the user may make a user input related to a virtual object such as the virtual object 514 and/or the other virtual objects (e.g., such as and/or including the virtual objects 512, 516, 520a-f, 522a-b, and/or components or supplementary virtual objects 520al-a4) in Figures 4-8 on augmented reality display 510 displayed on a computing device. The user input may be a user selection of the virtual object such as the virtual object 514 by touching, clicking, drag-and-dropping, gazing at and/or other interaction with display unit 300 in connection with the virtual object such as the virtual object 514 of the augmented reality display 510 displayed on display unit 300. If the user input may be made, a passive message which has numerical data such as x, y and z coordinates of the virtual object such as the virtual 514 of augmented reality image 510 may be generated based on a location (x, y, z) of the user selection of the virtual object such as the virtual object 514. Then, the augmented reality engine 850 may receive the passive message generated from the virtual object such as the virtual object 514. The passive message may be an internal data structure for communication between a user and virtual objects, and thus the passive message may not be displayed on the augmented reality display.

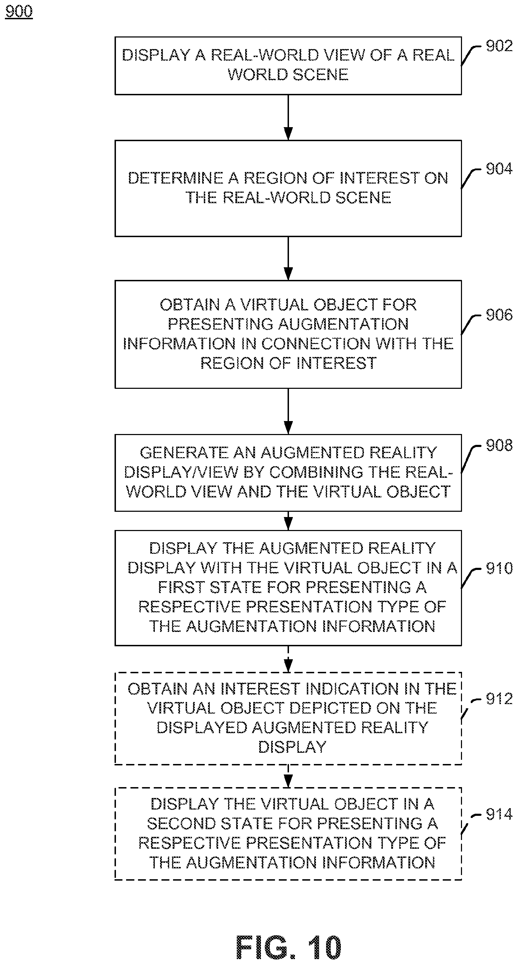

Figure 10 is a flow diagram illustrating an example method 900 for presenting augmentation information in accordance with an embodiment. The method 900 may be described with reference to the augmented reality system of Figure 3 and to the illustrative example images shown in Figures 4-8. The method 900 may be carried out using other architectures, as well. Additionally, other real-world objects and/or virtual objects described herein (e.g., real-world objects 412-426, virtual objects 512, 516, 520a-f, 522a-b, and/or components or supplementary virtual objects 520al-a4) may be used with the method 900.

At block 902, the display unit 300 may display a real-world view 410. At block 904, the augmented reality unit 200 may determine a region of interest on the real-world video 410. The augmented reality unit 200 may determine the region of interest based on a mapping between a designated roi-basis position on the displayed real-world view 410 and a correspondent roi-basis location.

At block 906, the augmented reality unit 200 may obtain a virtual object 514 for presenting augmentation information in connection with the region of interest. The augmented reality unit 200 may obtain the virtual object 514 from the virtual object repository 240, for example. The virtual object 514 may have a plurality of states for presenting respective presentation types of the augmentation information. The presentation types may include, for example, a summary, fuller augmentation details, etc. The summary may include, for example, any of an icon, an image, text, a concise representation of the augmentation information, and the like. The fuller augmentation details may include any augmentation information in addition to, and/or supplementary to, the summary.

At block 908, the augmented reality unit 200 may generate an augmented reality display 510 by combining the real-world view 410 and the virtual object 514.

At block 910, the display unit 300 may display the augmented reality display 510 with the virtual object 514 in a first state of the plurality of states. The virtual object 514, for example, may be in a first (e.g., a compact) state for presenting a summary.

The virtual object 514 may transition from one state to another state, and back again. For example, the virtual object may transition from the first state to a second state, and from the second state to the first state. The state change may be continuous or discontinuous. The virtual object 514 may transition from the compact state to the non-compact state by expanding from the compact state, and/or may transition from the non-compact state to the compact state by reducing back to the compact state. Alternatively and/or additionally, the virtual object 514 may transition from the compact state to the non-compact state by switching to a partially or fully enlarged state, and/or may transition from the non-compact state to the compact state by switching back to the compact state. In some embodiments, the virtual object 514 may transition from the compact state to the non-compact state by appending or otherwise adding a supplementary virtual object 514-1, and/or may transition from the non-compact state to the compact state by returning back to the compact state.

The transition from one state to another may be based on (e.g., occur responsive to) whether an interest (or a user expression of interest) in the virtual object 514 may be detected. The virtual object 514 may be in and/or transition back to the first (e.g., compact) state when no indication of interest in the virtual object 514 may be detected and/or can be inferred. The virtual object 514 may be in and/or transition to the second (e.g., non-compact) state when an interest indication in the virtual object may be detected and/or can be inferred. The interest indication may have values ("interest-indication values") commensurate with varying degrees of interest, such as, for example "minimally interested", "somewhat interested", "fully interested", etc. As an example, the interest-indication values may be based on (e.g., scale with corresponding values on) a sliding scale that has "minimally interested" towards one end to "fully interested" towards the other end with various intermediate degrees of interest in-between. In addition to being used to transition to the second (e.g., non-compact) state, the interest-indication values may be used to control expansion (growth and/or shrinkage) of the virtual object 514 while in the second state.

At block 912, the augmented reality unit 200 may obtain an interest indication in the virtual object 514 depicted on the augmented reality display 510.

At block 910, the display unit 300 may display the virtual object 514 in a second state of the plurality of states. The display unit 300 may do so based on (e.g., responsive to the interest indication). The virtual object 514 may be in the second (e.g., a non-compact, enlarged, extended, expanded, etc.) state for presenting fuller augmentation details.

Although not shown, the augmented reality display may include an emphasizing virtual object for visually emphasizing the region of interest. The emphasizing virtual object may overlay some or the entire region of interest. The emphasizing virtual object may be, for example, an outline, highlight, etc. of the region of interest or an element thereof (e.g., a real-world object depicted in the real-world view). To facilitate this, the augmented reality unit 200 may generate the emphasizing virtual object, and/or augment the augmented reality display by applying the emphasizing virtual object to the region of interest.

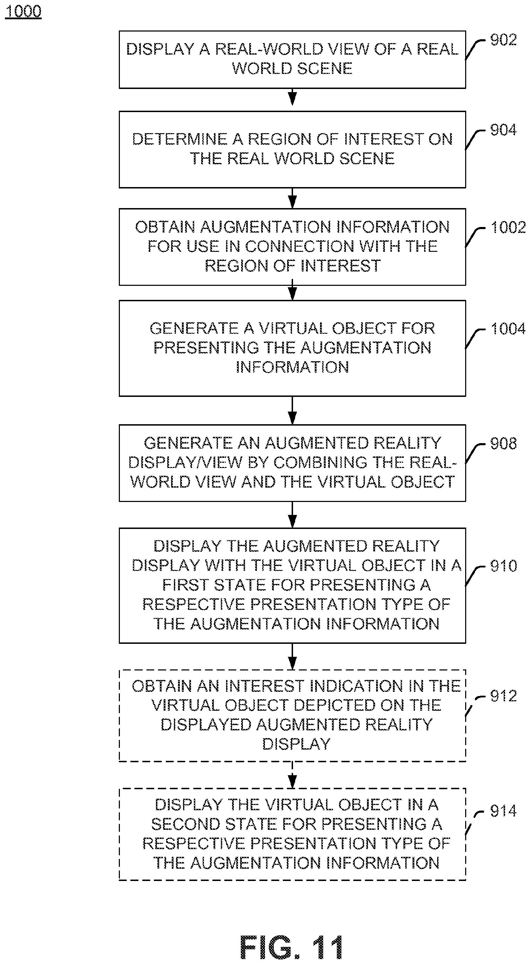

Figure 11 is a flow diagram illustrating an example method 1000 for presenting augmentation information in accordance with an embodiment. The method 1000 may be described with reference to the augmented reality system of Figure 3 and to the illustrative example images shown in Figures 4-8. The method 1000 may be carried out using other architectures, as well. The method 1000 of Figure 11 may similar to the method 900 of Figure 10, for example, except as described herein. Additionally, other real-world objects and/or virtual objects described herein (e.g., real-world objects 412-426, virtual objects 512, 516, 520a-f, 522a-b, and/or components or supplementary virtual objects 520al-a4) may be used with the method 1000.

At block 1002, the augmented reality unit 200 may obtain augmentation information for use in connection with the region of interest. The augmented reality unit 200 may obtain the augmentation information from an augmentation-information repository (not shown in Figure 3).

At block 1004, the augmented reality unit 200 may generate a virtual object 514 for presenting the augmentation information. The augmented reality unit 200 may obtain the virtual object 514 from the virtual object repository 240, for example. The virtual object 514 may have a plurality of states for presenting respective presentation types of the augmentation information. The presentation types may include, for example, a summary, fuller augmentation details, etc.

After block 1004, the method 1000 may be carried out in accordance with blocks 908-914 of Figure 10.

Although not shown, the augmented reality display may include an emphasizing virtual object for visually emphasizing the region of interest. The emphasizing virtual object may overlay some or the entire region of interest. The emphasizing virtual object may be, for example, an outline, highlight, etc. of the region of interest or an element thereof (e.g., a real-world object depicted in the real-world view). To facilitate this, the augmented reality unit 200 may generate the emphasizing virtual object, and/or augment the augmented reality display by applying the emphasizing virtual object to the region of interest.

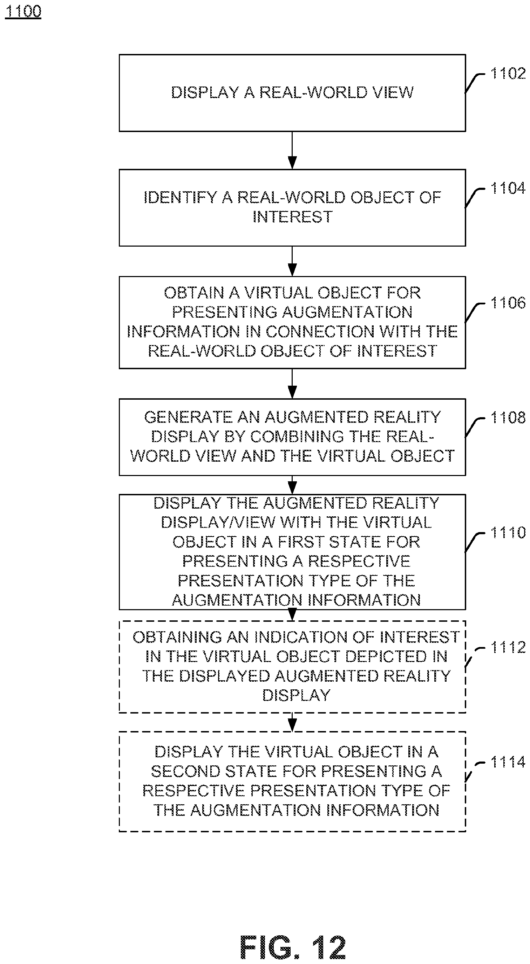

Figure 12 is a flow diagram illustrating an example method 1100 for presenting augmentation information in accordance with an embodiment. The method 1100 may be described with reference to the augmented reality system of Figure 9 and to the illustrative example images shown in Figures 4-8. The method 1100 may be carried out using other architectures, as well.

At block 1102, the display unit 300 may display a real-world view 410. At block 1104, the augmented reality unit 200 may determine a designated position 428 on the displayed real-world view 410. This designated position 428 may correspond to where an eye tracking system indicates a user has focused on. Additionally, other real-world objects and/or virtual objects described herein (e.g., real-world objects 412-426, virtual objects 512, 516, 520a-f, 522a-b, and/or components or supplementary virtual objects 520al-a4) may be used with the method 1100.

At block 1106, the augmented reality unit 200 may identify, from the real-world view 410, a real-world object 418 corresponding to the designated position 428. At block 1104, the augmented reality unit 200 may obtain augmentation information for use in connection with the identified real-world object 418.

At block 1108, the augmented reality unit 200 may generate a virtual object 514 for presenting augmentation information in connection with the identified real-world object 418. The augmented reality unit 200 may obtain the virtual object 514 from the virtual object repository 240, for example. The virtual object 514 may have a plurality of states for presenting respective presentation types of the augmentation information. The presentation types may include, for example, a summary, fuller augmentation details, etc.

At block 1110, the augmented reality unit 200 may augment the real-world image 410 with the virtual object 514. The virtual object 514, for example, may be in a first (e.g., a compact) state for presenting a summary.

At block 1112, the augmented reality unit 200 may obtain an interest indication in the virtual object 514 depicted on the augmented reality display 510.

At block 1114, the display unit 300 may display the virtual object 514 in a second state. The second state may be for presenting fuller augmentation details. The display unit 300 may display the virtual object 514 in a second state when the eye tracking system indicates the user has gazed toward and/or focused on the virtual object 514.

Although not shown, the augmented reality display may include an emphasizing virtual object for visually emphasizing the identified real-world object 418. The emphasizing virtual object may overlay some or the entire identified real-world object 418. The emphasizing virtual object may be, for example, an outline, highlight, etc. of the identified real-world object 418. To facilitate this, the augmented reality unit 200 may generate the emphasizing virtual object, and/or augment the augmented reality display by applying the emphasizing virtual object to the identified real-world object 418.

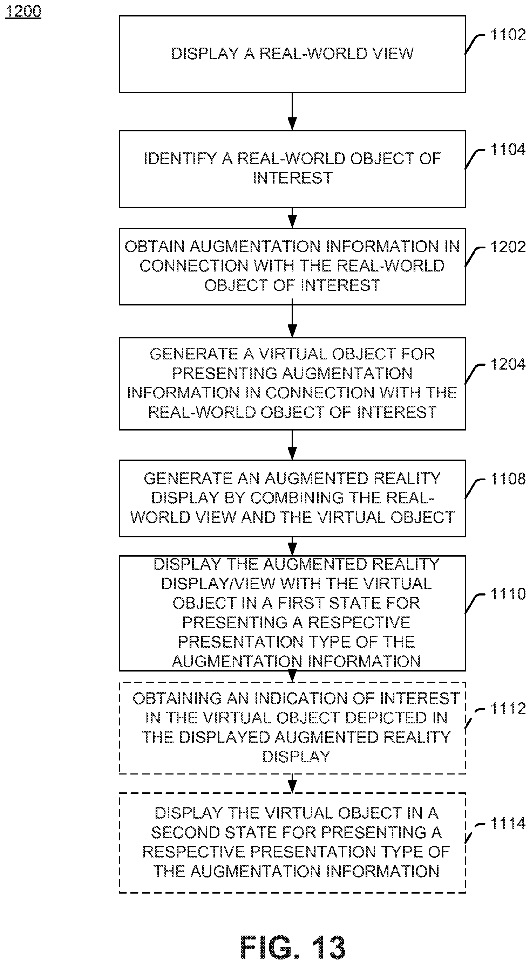

Figure 13 is a flow diagram illustrating an example method 1200 for presenting augmentation information in accordance with an embodiment. The method 1200 may be described with reference to the augmented reality system of Figure 9 and to the illustrative example images shown in Figures 4-8. The method 1200 may be carried out using other architectures, as well. The method 1200 of Figure 13 may be similar to the method 1100 of Figure 12, for example, except as described below. Additionally, other real-world objects and/or virtual objects described herein (e.g., real-world objects 412-426, virtual objects 512, 516, 520a-f, 522a-b, and/or components or supplementary virtual objects 520al-a4) may be used with the method 1200.

At block 1202, the augmented reality unit 200 may obtain augmentation information for use in connection with the identified real-world object 418. The augmented reality unit 200 may obtain the augmentation information from an augmentation-information repository (not shown in Figure 9).

At block 1204, the augmented reality unit 200 may generate a virtual object 514 for presenting the augmentation information. The augmented reality unit 200 may obtain the virtual object 514 from the virtual object repository 240. The virtual object 514 may have a plurality of states for presenting respective presentation types of the augmentation information. The presentation types may include, for example, a summary, fuller augmentation details, etc.

After block 1104, the method 1100 may be carried out in accordance with blocks 1108-1114 of Figure 12.

Although not shown, the augmented reality display may include an emphasizing virtual object for visually emphasizing the identified real-world object 418. The emphasizing virtual object may overlay some or the entire identified real-world object 418. The emphasizing virtual object may be, for example, an outline, highlight, etc. of the identified real-world object 418. To facilitate this, the augmented reality unit 200 may generate the emphasizing virtual object, and/or augment the augmented reality display by applying the emphasizing virtual object to the identified real-world object 418.

In certain representative embodiments, an augmented reality display and/or user interface and/or a method for providing an augmented reality display and/or user interface may combine the real-world view and relevant augmentation information. In certain representative embodiments, the augmented reality display and/or user interface and/or a method for providing an augmented reality display and/or user interface may determine an area for displaying the augmentation information that does not obfuscate an item of focus.

In certain representative embodiments, the method may include determining the focus in the visual domain. In certain representative embodiments, the method may include identifying a real-world object of focus and its boundary. In certain representative embodiments, the method may include displaying a virtual object with a summary for any augmentation information relevant for the identified real-world object. In certain representative embodiments, the method may include expanding the virtual object from the summary to fuller augmentation details based on an eye focus on the virtual object.

Referring back to Figures 4-8, the real-world objects 412-426 may be visible to a user. When the user looks at the screen of the display unit 300 no real-world object has been identified. Once the user's eyes fixate on real-world object 418, the real-world object 418 may be identified. As the user's eyes move around, the eye tracking unit 260 may determines if the user's eyes have fixated on a particular point. Assume that the user's eyes fixate on designated position 428. The object identification unit 220 may determine that the designated position 428 corresponds to the identified real-world object 418.

Once the designated position 428 and the real-world object 418 have been identified, the identified real-world object 418 may be highlighted (e.g., using a bold outline) as illustrated in Figure 5. The highlighting may be in any format that distinguishes identified real-world object 418 from the other objects in view.

Once the real-world object 418 may be identified, the virtual objects such as virtual objects 512, 514 516, 520a-d, and/or components or supplementary virtual objects 520al-a4 may be displayed with respective summaries. The summary information might be restaurant ads, nearby landmarks, pictures taken from the building, etc. The virtual objects such as virtual objects 512, 514 516, 520a-d, and/or components or supplementary virtual objects 520al-a4 may be presented in a format that differentiates them from the identified real-world object 418. The virtual objects such as virtual objects 512, 514 516, 520a-d, and/or components or supplementary virtual objects 520al-a4 may be icons, geometrical figures, callouts, etc. The visual presentation may be subtle so that the summary does not clutter the screen visually.

When the user's gaze approaches the virtual object 514 and/or the other virtual objects such as virtual objects 512, 516, 520a-d, and/or components or supplementary virtual objects 520al-a4, the object may be expanded to present the fuller augmentation details. As shown in Figure 7B and Figures 8D-8E, the expansion may be shown as supplementary information 514-1 and/or boxes or areas 522a-b and/or components 520al-a4. In an example (e.g., as shown in Figure 7A and Figures 8D-8E respectively), the expansion may be shown as a blowup of the virtual object, in areas around the virtual object, adjacent to the virtual object, and/or the like

In certain representative embodiments, the AR effects of the virtual objects may be automatically and/or dynamically generated based on (e.g., responsive to) user context, including, for example, user preferences, environmental conditions, etc.

In certain representative embodiments, the identified real-world object 418 may be highlighted. The highlighting may be via color, texture, or brightness.

In certain representative embodiments, the virtual objects such as virtual objects 512, 514 516, 520a-f, 522a-b, and/or components or supplementary virtual objects 520al-a4 may be displayed in close proximity to the identified real-world object. Displaying the virtual objects 512-516 and/or 520-525 or the components thereof such as 520a-d in close proximity to the identified or selected real-world object may reduce a distance the user's eyes travel to focus on the secondary information.

In certain representative embodiments, the virtual objects such as virtual objects 512, 514 516, 520a-f, 522a-b, and/or components or supplementary virtual objects 520al-a4 may be displayed proximate to a focused-on location. In certain representative embodiments, the virtual objects such as virtual objects 512, 514 516, 520a-f, 522a-b, and/or components or supplementary virtual objects 520al-a4 may be displayed proximate to a focused-on location and adjacent to the identified real-world object. In certain representative embodiments, the virtual objects such as virtual objects 512, 514 516, 520a-f, 522a-b, and/or components or supplementary virtual objects 520al-a4 may be displayed so as not occlude another real-world object neighboring the identified real-world object. In certain representative embodiments, the virtual objects such as virtual objects 512, 514 516, 520a-f, 522a-b, and/or components or supplementary virtual objects 520al-a4 may be displayed so as not occlude another and/or another virtual object neighboring the identified real-world object.

In certain representative embodiments, the augmentation information may be organized in a list format. In certain representative embodiments, the augmentation information may be organized in a non-linear pattern. In certain representative embodiments, the augmentation information may be displayed in a subdued format. In certain representative embodiments, the augmentation information may be displayed in a more prominent format responsive to the eye tracking system indicating a user's gaze may be approaching the corresponding virtual object.

In certain representative embodiments, the augmentation information may be displayed with constant prominence. In certain representative embodiments, the augmentation information may be displayed in a given color. In certain representative embodiments, the color may become darker responsive to the eye tracking system indicating the user's gaze may be approaching the corresponding virtual object. In certain representative embodiments, the color may become lighter responsive to the eye tracking system indicating the user's gaze may be approaching the corresponding virtual object.

In certain representative embodiments, the augmentation information may be displayed at a given size. In certain representative embodiments, the size may become larger responsive to the eye tracking system indicating the user's gaze may be approaching the corresponding virtual object. In certain representative embodiments, the size may grow in proportion to distance. In certain representative embodiments, the size may become smaller responsive to the eye tracking system indicating the user's gaze may be retreating from the corresponding virtual object. In certain representative embodiments, the size may shrink in proportion to distance.

In the foregoing description, each of the methods 900-1200 include one or more processes for determining a region of interest, object of interest and the like on the real world scene based on a mapping between a designated roi-basis position on the displayed real-world view and correspondent roi-basis location. Each of the methods 900-1200, however, may be modified to include (or replace like-type processes with) one or more processes for determining the region of interest, object of interest and the like on the real world scene based on a mapping between a designated roi-basis position on the augmented reality display and correspondent roi-basis location (i.e., the real-world location and/or a localized map location corresponding to the designated roi-basis position on the augmented reality display).

In some embodiments, the methods 900-1200 may be modified to include one or more processes to first clear a current region of interest, object of interest, virtual objects, and the like from the augmented reality display. In some embodiments, the methods 900-1200 may be modified to include one or more processes for recognizing one or more user inputs for clearing the region of interest, object of interest, virtual objects, and the like from the augmented reality display. These user inputs or selection may be made by and/or through touching, clicking, drag-and-dropping, gazing at, voice/speech recognition and/or other interaction in connection with the augmented reality displays (e.g., augmented reality display 510) displayed on display unit 300.

The methods, apparatus, systems, devices, and computer program products provided herein are well-suited for communications involving both wired and wireless networks. Wired networks are well-known. An overview of various types of wireless devices and infrastructure may be provided with respect to Figures 14A-14E, where various elements of the network may utilize, perform, be arranged in accordance with and/or be adapted and/or configured for the methods, apparatuses and systems provided herein.

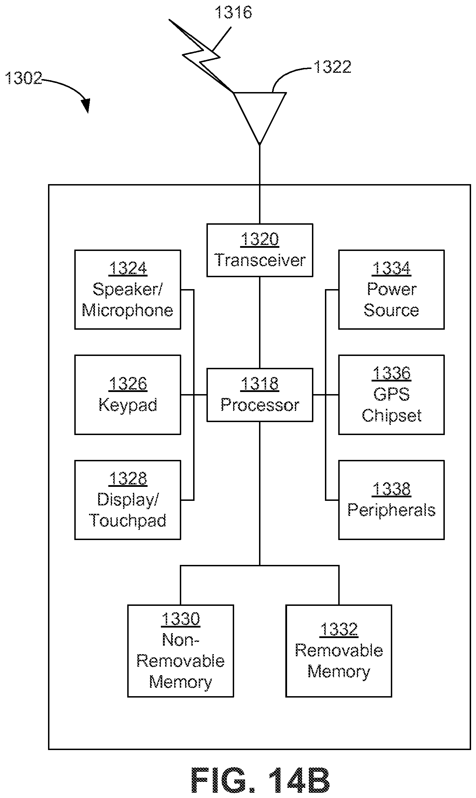

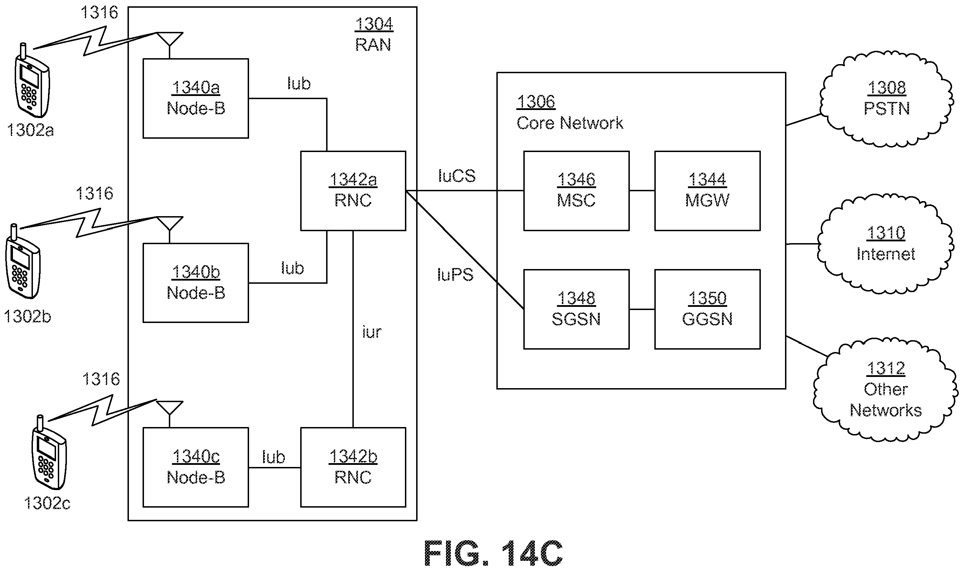

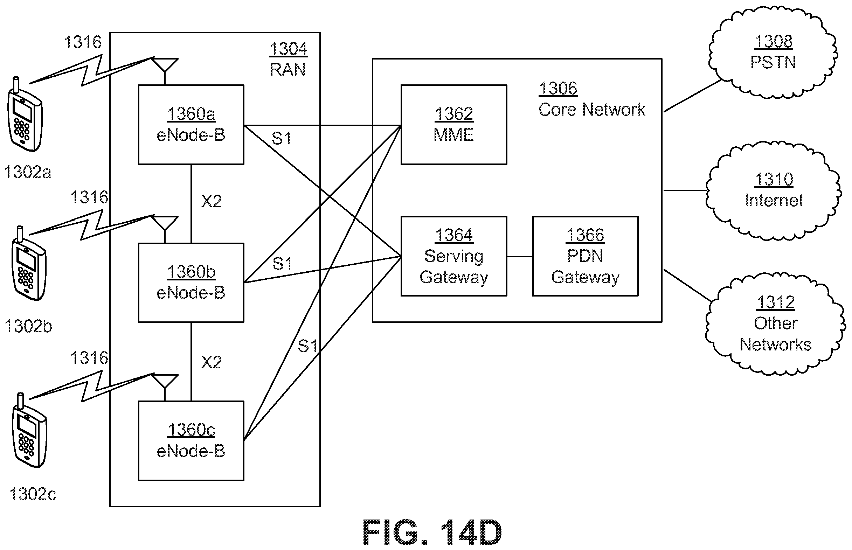

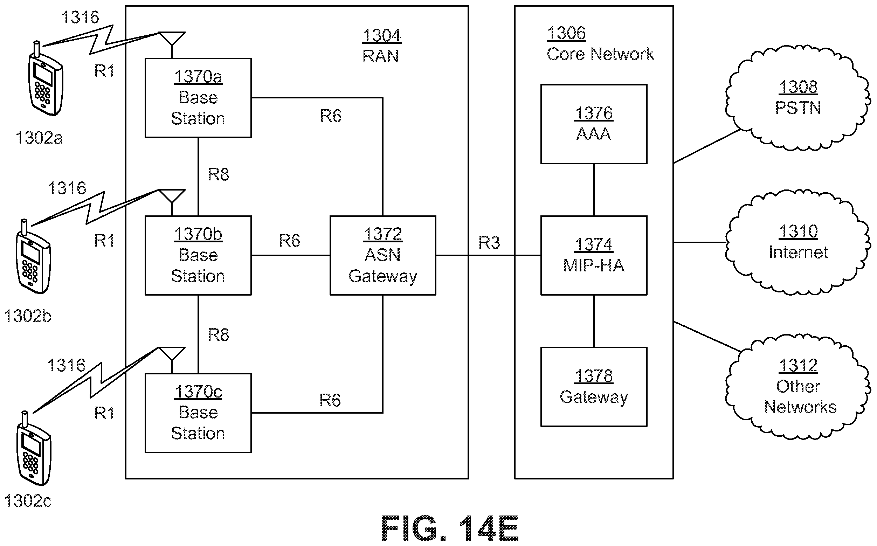

Figures 14A-14E (collectively "Figure 14") are block diagrams illustrating an example communications system 1300 in which one or more disclosed embodiments may be implemented. In general, the communications system 1300 defines an architecture that supports multiple access systems over which multiple wireless users may access and/or exchange (e.g., send and/or receive) content, such as voice, data, video, messaging, broadcast, etc. The architecture also supports having two or more of the multiple access systems use and/or be configured in accordance with different access technologies. This way, the communications system 1300 may service both wireless users capable of using a single access technology, and wireless users capable of using multiple access technologies.

The multiple access systems may include respective accesses; each of which may be, for example, an access network, access point and the like. In various embodiments, all of the multiple accesses may be configured with and/or employ the same radio access technologies ("RATs"). Some or all of such accesses ("single-RAT accesses") may be owned, managed, controlled, operated, etc. by either (i) a single mobile network operator and/or carrier (collectively "MNO") or (ii) multiple MNOs. In various embodiments, some or all of the multiple accesses may be configured with and/or employ different RATs. These multiple accesses ("multi-RAT accesses") may be owned, managed, controlled, operated, etc. by either a single MNO or multiple MNOs.

The communications system 1300 may enable multiple wireless users to access such content through the sharing of system resources, including wireless bandwidth. For example, the communications systems 1300 may employ one or more channel access methods, such as code division multiple access (CDMA), time division multiple access (TDMA), frequency division multiple access (FDMA), orthogonal FDMA (OFDMA), single-carrier FDMA (SC-FDMA), and the like.

As shown in Figure 13A, the communications system 1300 may include wireless transmit/receive units (WTRUs) 1302a, 1302b, 1302c, 1302d, a radio access network (RAN) 1304, a core network 1306, a public switched telephone network (PSTN) 1308, the Internet 1310, and other networks 1312, though it will be appreciated that the disclosed embodiments contemplate any number of WTRUs, base stations, networks, and/or network elements. Each of the WTRUs 1302a, 1302b, 1302c, 1302d may be any type of device configured to operate and/or communicate in a wireless environment. By way of example, the WTRUs 1302a, 1302b, 1302c, 1302d may be configured to transmit and/or receive wireless signals, and may include user equipment (UE), a mobile station, a fixed or mobile subscriber unit, a pager, a cellular telephone, a personal digital assistant (PDA), a smartphone, a laptop, a netbook, a personal computer, a wireless sensor, consumer electronics, a terminal or like-type device capable of receiving and processing compressed video communications, or like-type device.

The communications systems 1300 may also include a base station 1314a and a base station 1314b. Each of the base stations 1314a, 1314b may be any type of device configured to wirelessly interface with at least one of the WTRUs 1302a, 1302b, 1302c, 1302d to facilitate access to one or more communication networks, such as the core network 1306, the Internet 1310, and/or the networks 1312. By way of example, the base stations 1314a, 1314b may be a base transceiver station (BTS), Node-B (NB), evolved NB (eNB), Home NB (HNB), Home eNB (HeNB), enterprise NB ("ENT-NB"), enterprise eNB ("ENT-eNB"), a site controller, an access point (AP), a wireless router, a media aware network element (MANE) and the like. While the base stations 1314a, 1314b are each depicted as a single element, it will be appreciated that the base stations 1314a, 1314b may include any number of interconnected base stations and/or network elements.

The base station 1314a may be part of the RAN 1304, which may also include other base stations and/or network elements (not shown), such as a base station controller (BSC), a radio network controller (RNC), relay nodes, etc. The base station 1314a and/or the base station 1314b may be configured to transmit and/or receive wireless signals within a particular geographic region, which may be referred to as a cell (not shown). The cell may further be divided into cell sectors. For example, the cell associated with the base station 1314a may be divided into three sectors. Thus, in one embodiment, the base station 1314a may include three transceivers, i.e., one for each sector of the cell. In another embodiment, the base station 1314a may employ multiple-input multiple output (MIMO) technology and, therefore, may utilize multiple transceivers for each sector of the cell.

The base stations 1314a, 1314b may communicate with one or more of the WTRUs 1302a, 1302b, 1302c, 1302d over an air interface 1316, which may be any suitable wireless communication link (e.g., radio frequency (RF), microwave, infrared (IR), ultraviolet (UV), visible light, etc.). The air interface 1316 may be established using any suitable radio access technology (RAT).

More specifically, as noted above, the communications system 1300 may be a multiple access system and may employ one or more channel access schemes, such as CDMA, TDMA, FDMA, OFDMA, SC-FDMA, and the like. For example, the base station 1314a in the RAN 1304 and the WTRUs 1302a, 1302b, 1302c may implement a radio technology such as Universal Mobile Telecommunications System (UMTS) Terrestrial Radio Access (UTRA), which may establish the air interface 1316 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In another embodiment, the base station 1314a and the WTRUs 1302a, 1302b, 1302c may implement a radio technology such as Evolved UMTS Terrestrial Radio Access (E-UTRA), which may establish the air interface 1316 using Long Term Evolution (LTE) and/or LTE-Advanced (LTE-A).

In other embodiments, the base station 1314a and the WTRUs 1302a, 1302b, 1302c may implement radio technologies such as IEEE 802.16 (i.e., Worldwide Interoperability for Microwave Access (WiMAX)), CDMA2000, CDMA2000 IX, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 1314b in Figure 13A may be a wireless router, Home Node B, Home eNode B, or access point, for example, and may utilize any suitable RAT for facilitating wireless connectivity in a localized area, such as a place of business, a home, a vehicle, a campus, and the like. In one embodiment, the base station 1314b and the WTRUs 1302c, 1302d may implement a radio technology such as IEEE 802.11 to establish a wireless local area network (WLAN). In another embodiment, the base station 1314b and the WTRUs 1302c, 1302d may implement a radio technology such as IEEE 802.15 to establish a wireless personal area network (WPAN). In yet another embodiment, the base station 1314b and the WTRUs 1302c, 1302d may utilize a cellular-based RAT (e.g., WCDMA, CDMA2000, GSM, LTE, LTE-A, etc.) to establish a picocell or femtocell. As shown in Figure 13A, the base station 1314b may have a direct connection to the Internet 1310. Thus, the base station 1314b may not be required to access the Internet 1310 via the core network 1306.

The RAN 1304 may be in communication with the core network 1306, which may be any type of network configured to provide voice, data, applications, and/or voice over internet protocol (VoIP) services to one or more of the WTRUs 1302a, 1302b, 1302c, 1302d. For example, the core network 1306 may provide call control, billing services, mobile location-based services, pre-paid calling, Internet connectivity, video distribution, etc., and/or perform high-level security functions, such as user authentication. Although not shown in Figure 13A, it will be appreciated that the RAN 1304 and/or the core network 1306 may be in direct or indirect communication with other RANs that employ the same RAT as the RAN 1304 or a different RAT. For example, in addition to being connected to the RAN 1304, which may be utilizing an E-UTRA radio technology, the core network 1306 may also be in communication with another RAN (not shown) employing a GSM radio technology.

The core network 1306 may also serve as a gateway for the WTRUs 1302a, 1302b, 1302c, 1302d to access the PSTN 1308, the Internet 1310, and/or other networks 1312. The PSTN 1308 may include circuit-switched telephone networks that provide plain old telephone service (POTS). The Internet 1310 may include a global system of interconnected computer networks and devices that use common communication protocols, such as the transmission control protocol (TCP), user datagram protocol (UDP) and the internet protocol (IP) in the TCP/IP internet protocol suite. The networks 1312 may include wired or wireless communications networks owned and/or operated by other service providers. For example, the networks 1312 may include another core network connected to one or more RANs, which may employ the same RAT as the RAN 1304 or a different RAT.

Some or all of the WTRUs 1302a, 1302b, 1302c, 1302d in the communications system 1300 may include multi-mode capabilities, i.e., the WTRUs 1302a, 1302b, 1302c, 1302d may include multiple transceivers for communicating with different wireless networks over different wireless links. For example, the WTRU 1302c shown in Figure 13A may be configured to communicate with the base station 1314a, which may employ a cellular-based radio technology, and with the base station 1314b, which may employ an IEEE 802 radio technology.

Figure 14B is a system diagram of an example WTRU 1302. As shown in Figure 14B, the WTRU 1302 may include a processor 1318, a transceiver 1320, a transmit/receive element 1322, a speaker/microphone 1324, a keypad 1326, a display/touchpad 1328, non-removable memory 1306, removable memory 1332, a power source 1334, a global positioning system (GPS) chipset 1336, and other peripherals 1338 (e.g., a camera or other optical capturing device). It will be appreciated that the WTRU 1302 may include any sub-combination of the foregoing elements while remaining consistent with an embodiment.

The processor 1318 may be a general purpose processor, a special purpose processor, a conventional processor, a digital signal processor (DSP), a graphics processing unit (GPU), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 1318 may perform signal coding, data processing, power control, input/output processing, and/or any other functionality that enables the WTRU 1302 to operate in a wireless environment. The processor 1318 may be coupled to the transceiver 1320, which may be coupled to the transmit/receive element 1322. While Figure 14B depicts the processor 1318 and the transceiver 1320 as separate components, it will be appreciated that the processor 1318 and the transceiver 1320 may be integrated together in an electronic package or chip.

The transmit/receive element 1322 may be configured to transmit signals to, or receive signals from, a base station (e.g., the base station 1314a) over the air interface 1316. For example, in one embodiment, the transmit/receive element 1322 may be an antenna configured to transmit and/or receive RF signals. In another embodiment, the transmit/receive element 1322 may be an emitter/detector configured to transmit and/or receive IR, UV, or visible light signals, for example. In yet another embodiment, the transmit/receive element 1322 may be configured to transmit and receive both RF and light signals. It will be appreciated that the transmit/receive element 1322 may be configured to transmit and/or receive any combination of wireless signals.

In addition, although the transmit/receive element 1322 is depicted in Figure 14B as a single element, the WTRU 1302 may include any number of transmit/receive elements 1322. More specifically, the WTRU 1302 may employ MIMO technology. Thus, in one embodiment, the WTRU 1302 may include two or more transmit/receive elements 1322 (e.g., multiple antennas) for transmitting and receiving wireless signals over the air interface 1316.

The transceiver 1320 may be configured to modulate the signals that are to be transmitted by the transmit/receive element 1322 and to demodulate the signals that are received by the transmit/receive element 1322. As noted above, the WTRU 1302 may have multi-mode capabilities. Thus, the transceiver 1320 may include multiple transceivers for enabling the WTRU 1302 to communicate via multiple RATs, such as UTRA and IEEE 802.11, for example.

The processor 1318 of the WTRU 1302 may be coupled to, and may receive user input data from, the speaker/microphone 1324, the keypad 1326, and/or the display/touchpad 1328 (e.g., a liquid crystal display (LCD) display unit or organic light-emitting diode (OLED) display unit). The processor 1318 may also output user data to the speaker/microphone 1324, the keypad 1326, and/or the display/touchpad 1328. In addition, the processor 1318 may access information from, and store data in, any type of suitable memory, such as the non-removable memory 1306 and/or the removable memory 1332. The non-removable memory 1306 may include random-access memory (RAM), read-only memory (ROM), a hard disk, or any other type of memory storage device. The removable memory 1332 may include a subscriber identity module (SIM) card, a memory stick, a secure digital (SD) memory card, and the like. In other embodiments, the processor 1318 may access information from, and store data in, memory that is not physically located on the WTRU 1302, such as on a server or a home computer (not shown).

The processor 1318 may receive power from the power source 1334, and may be configured to distribute and/or control the power to the other components in the WTRU 1302. The power source 1334 may be any suitable device for powering the WTRU 1302. For example, the power source 1334 may include one or more dry cell batteries (e.g., nickel-cadmium (NiCd), nickel-zinc (Nil3n), nickel metal hydride (NiMH), lithium-ion (Li-ion), etc.), solar cells, fuel cells, and the like.

The processor 1318 may also be coupled to the GPS chipset 1336, which may be configured to provide location information (e.g., longitude and latitude) regarding the current location of the WTRU 1302. In addition to, or in lieu of, the information from the GPS chipset 1336, the WTRU 1302 may receive location information over the air interface 1316 from a base station (e.g., base stations 1314a, 1314b) and/or determine its location based on the timing of the signals being received from two or more nearby base stations. It will be appreciated that the WTRU 1302 may acquire location information by way of any suitable location-determination method while remaining consistent with an embodiment.

The processor 1318 may further be coupled to other peripherals 1338, which may include one or more software and/or hardware modules that provide additional features, functionality and/or wired or wireless connectivity. For example, the peripherals 1338 may include an accelerometer, an e-compass, a satellite transceiver, a digital camera (for photographs or video), a universal serial bus (USB) port, a vibration device, a television transceiver, a hands free headset, a Bluetooth® module, a frequency modulated (FM) radio unit, a digital music player, a media player, a video game player module, an Internet browser, and the like.

Figure 14C is a system diagram of the RAN 1304 and the core network 1306 according to an embodiment. As noted above, the RAN 1304 may employ a UTRA radio technology to communicate with the WTRUs 1302a, 1302b, 1302c over the air interface 1316. The RAN 1304 may also be in communication with the core network 1306. As shown in Figure 14C, the RAN 1304 may include Node-Bs 1340a, 1340b, 1340c, which may each include one or more transceivers for communicating with the WTRUs 1302a, 1302b, 1302c over the air interface 1316. The Node-Bs 1340a, 1340b, 1340c may each be associated with a particular cell (not shown) within the RAN 1304. The RAN 1304 may also include RNCs 1342a, 1342b. It will be appreciated that the RAN 1304 may include any number of Node-Bs and RNCs while remaining consistent with an embodiment.

As shown in Figure 14C, the Node-Bs 1340a, 1340b may be in communication with the RNC 1342a. Additionally, the Node-B 1340c may be in communication with the RNC 1342b. The Node-Bs 1340a, 1340b, 1340c may communicate with the respective RNCs 1342a, 1342b via an Iub interface. The RNCs 1342a, 1342b may be in communication with one another via an Iur interface. Each of the RNCs 1342a, 1342b may be configured to control the respective Node-Bs 1340a, 1340b, 1340c to which it is connected. In addition, each of the RNCs 1342a, 1342b may be configured to carry out or support other functionality, such as outer loop power control, load control, admission control, packet scheduling, handover control, macrodiversity, security functions, data encryption, and the like.

The core network 1306 shown in Figure 14C may include a media gateway (MGW) 1344, a mobile switching center (MSC) 1346, a serving GPRS support node (SGSN) 1348, and/or a gateway GPRS support node (GGSN) 1350. While each of the foregoing elements are depicted as part of the core network 1306, it will be appreciated that any one of these elements may be owned and/or operated by an entity other than the core network operator.

The RNC 1342a in the RAN 1304 may be connected to the MSC 1346 in the core network 1306 via an IuCS interface. The MSC 1346 may be connected to the MGW 1344. The MSC 1346 and the MGW 1344 may provide the WTRUs 1302a, 1302b, 1302c with access to circuit-switched networks, such as the PSTN 1308, to facilitate communications between the WTRUs 1302a, 1302b, 1302c and traditional land-line communications devices.

The RNC 1342a in the RAN 1304 may also be connected to the SGSN 1348 in the core network 1306 via an IuPS interface. The SGSN 1348 may be connected to the GGSN 1350. The SGSN 1348 and the GGSN 1350 may provide the WTRUs 1302a, 1302b, 1302c with access to packet-switched networks, such as the Internet 1310, to facilitate communications between and the WTRUs 1302a, 1302b, 1302c and IP-enabled devices.

As noted above, the core network 1306 may also be connected to the networks 1312, which may include other wired or wireless networks that are owned and/or operated by other service providers.

Figure 14D is a system diagram of the RAN 1304 and the core network 1306 according to another embodiment. As noted above, the RAN 1304 may employ an E-UTRA radio technology to communicate with the WTRUs 1302a, 1302b, 1302c over the air interface 1316. The RAN 1304 may also be in communication with the core network 1306.

The RAN 1304 may include eNode Bs 1360a, 1360b, 1360c, though it will be appreciated that the RAN 1304 may include any number of eNode Bs while remaining consistent with an embodiment. The eNode Bs 1360a, 1360b, 1360c may each include one or more transceivers for communicating with the WTRUs 1302a, 1302b, 1302c over the air interface 1316. In one embodiment, the eNode Bs 1360a, 1360b, 1360c may implement MIMO technology. Thus, the eNode B 1360a, for example, may use multiple antennas to transmit wireless signals to, and receive wireless signals from, the WTRU 1302a.

Each of the eNode Bs 1360a, 1360b, 1360c may be associated with a particular cell (not shown) and may be configured to handle radio resource management decisions, handover decisions, scheduling of users in the uplink and/or downlink, and the like. As shown in Figure 14D, the eNode Bs 1360a, 1360b, 1360c may communicate with one another over an X2 interface.

The core network 1306 shown in Figure 14D may include a mobility management gateway (MME) 1362, a serving gateway (SGW) 1364, and a packet data network (PDN) gateway (PGW) 1366. While each of the foregoing elements are depicted as part of the core network 1306, it will be appreciated that any one of these elements may be owned and/or operated by an entity other than the core network operator.

The MME 1362 may be connected to each of the eNode Bs 1360a, 1360b, 1360c in the RAN 1304 via an Sl interface and may serve as a control node. For example, the MME 1362 may be responsible for authenticating users of the WTRUs 1302a, 1302b, 1302c, bearer activation/deactivation, selecting a particular SGW during an initial attach of the WTRUs 1302a, 1302b, 1302c, and the like. The MME 1362 may also provide a control plane function for switching between the RAN 1304 and other RANs (not shown) that employ other radio technologies, such as GSM or WCDMA.

The SGW 1364 may be connected to each of the eNode Bs 1360a, 1360b, 1360c in the RAN 1304 via the Sl interface. The SGW 1364 may generally route and forward user data packets to/from the WTRUs 1302a, 1302b, 1302c. The SGW 1364 may also perform other functions, such as anchoring user planes during inter-eNode B handovers, triggering paging when downlink data is available for the WTRUs 1302a, 1302b, 1302c, managing and storing contexts of the WTRUs 1302a, 1302b, 1302c, and the like.

The SGW 1364 may also be connected to the PGW 1366, which may provide the WTRUs 1302a, 1302b, 1302c with access to packet-switched networks, such as the Internet 1310, to facilitate communications between the WTRUs 1302a, 1302b, 1302c and IP-enabled devices.

The core network 1306 may facilitate communications with other networks. For example, the core network 1306 may provide the WTRUs 1302a, 1302b, 1302c with access to circuit-switched networks, such as the PSTN 1308, to facilitate communications between the WTRUs 1302a, 1302b, 1302c and traditional land-line communications devices. For example, the core network 1306 may include, or may communicate with, an IP gateway (e.g., an IP multimedia subsystem (IMS) server) that serves as an interface between the core network 1306 and the PSTN 1308. In addition, the core network 1306 may provide the WTRUs 1302a, 1302b, 1302c with access to the networks 1312, which may include other wired or wireless networks that are owned and/or operated by other service providers.

Figure 14E is a system diagram of the RAN 1304 and the core network 1306 according to another embodiment. The RAN 1304 may be an access service network (ASN) that employs IEEE 802.16 radio technology to communicate with the WTRUs 1302a, 1302b, 1302c over the air interface 1316. As will be further discussed below, the communication links between the different functional entities of the WTRUs 1302a, 1302b, 1302c, the RAN 1304, and the core network 1306 may be defined as reference points.

As shown in Figure 14E, the RAN 1304 may include base stations 1370a, 1370b, 1370c, and an ASN gateway 1372, though it will be appreciated that the RAN 1304 may include any number of base stations and ASN gateways while remaining consistent with an embodiment. The base stations 1370a, 1370b, 1370c may each be associated with a particular cell (not shown) in the RAN 1304 and may each include one or more transceivers for communicating with the WTRUs 1302a, 1302b, 1302c over the air interface 1316. In one embodiment, the base stations 1370a, 1370b, 1370c may implement MIMO technology. Thus, the base station 1370a, for example, may use multiple antennas to transmit wireless signals to, and receive wireless signals from, the WTRU 1302a. The base stations 1370a, 1370b, 1370c may also provide mobility management functions, such as handoff triggering, tunnel establishment, radio resource management, traffic classification, quality of service (QoS) policy enforcement, and the like. The ASN gateway 1372 may serve as a traffic aggregation point and may be responsible for paging, caching of subscriber profiles, routing to the core network 1306, and the like.

The air interface 1316 between the WTRUs 1302a, 1302b, 1302c and the RAN 1304 may be defined as an R1 reference point that implements the IEEE 802.16 specification. In addition, each of the WTRUs 1302a, 1302b, 1302c may establish a logical interface (not shown) with the core network 1306. The logical interface between the WTRUs 1302a, 1302b, 1302c and the core network 1306 may be defined as an R2 reference point, which may be used for authentication, authorization, IP host configuration management, and/or mobility management.

The communication link between each of the base stations 1370a, 1370b, 1370c may be defined as an R8 reference point that includes protocols for facilitating WTRU handovers and the transfer of data between base stations. The communication link between the base stations 1370a, 1370b, 1370c and the ASN gateway 1372 may be defined as an R6 reference point. The R6 reference point may include protocols for facilitating mobility management based on mobility events associated with each of the WTRUs 1302a, 1302b, 1302c.

As shown in Figure 14E, the RAN 1304 may be connected to the core network 1306. The communication link between the RAN 14 and the core network 1306 may defined as an R3 reference point that includes protocols for facilitating data transfer and mobility management capabilities, for example. The core network 1306 may include a mobile IP home agent (MIP-HA) 1374, an authentication, authorization, accounting (AAA) server 1376, and a gateway 1378. While each of the foregoing elements are depicted as part of the core network 1306, it will be appreciated that any one of these elements may be owned and/or operated by an entity other than the core network operator.

The MIP-HA 1374 may be responsible for IP address management, and may enable the WTRUs 1302a, 1302b, 1302c to roam between different ASNs and/or different core networks. The MIP-HA 1374 may provide the WTRUs 1302a, 1302b, 1302c with access to packet-switched networks, such as the Internet 1310, to facilitate communications between the WTRUs 1302a, 1302b, 1302c and IP-enabled devices. The AAA server 1376 may be responsible for user authentication and for supporting user services. The gateway 1378 may facilitate interworking with other networks. For example, the gateway 1378 may provide the WTRUs 1302a, 1302b, 1302c with access to circuit-switched networks, such as the PSTN 1308, to facilitate communications between the WTRUs 1302a, 1302b, 1302c and traditional land-line communications devices. In addition, the gateway 1378 may provide the WTRUs 1302a, 1302b, 1302c with access to the networks 1312, which may include other wired or wireless networks that are owned and/or operated by other service providers.

Although not shown in Figure 14E, it will be appreciated that the RAN 1304 may be connected to other ASNs and the core network 1306 may be connected to other core networks. The communication link between the RAN 1304 the other ASNs may be defined as an R4 reference point, which may include protocols for coordinating the mobility of the WTRUs 1302a, 1302b, 1302c between the RAN 1304 and the other ASNs. The communication link between the core network 1306 and the other core networks may be defined as an R5 reference, which may include protocols for facilitating interworking between home core networks and visited core networks.

Although features and elements are provided above in particular combinations, one of ordinary skill in the art will appreciate that each feature or element can be used alone or in any combination with the other features and elements. The present disclosure is not to be limited in terms of the particular embodiments described in this application, which are intended as illustrations of various aspects. No element, act, or instruction used in the description of the present application should be construed as critical or essential to the invention unless explicitly provided as such. Functionally equivalent methods and apparatuses within the scope of the disclosure, in addition to those enumerated herein, will be apparent to those skilled in the art from the foregoing descriptions. Such modifications and variations are intended to fall within the scope of the appended claims. The present disclosure is to be limited only by the terms of the appended claims. It is to be understood that this disclosure is not limited to particular methods or systems.

## Claims

1. A method for providing augmented information in an augmented reality system (10) which comprises a display (300), an image capturing unit (100), and an augmented reality unit (200) comprising a user recognition unit (210), an augmented reality engine (250), a virtual object repository unit (240), a region of interest, ROI, determining unit (220), the method comprising the steps of:
Displaying, on the display (300), a real-world view (410) comprising real-world objects (412-426) captured using the image capturing unit (100);
Receiving, at the user recognition unit (210), user input comprising an indication of interest in at least one of the real-world objects in the real-world view;
Generating, at the augmented reality engine (250), an augmented reality display by combining the real-world view and at least one of a virtual object (512-516, 520-522) associated with the at least one of the real-world objects;
Displaying, on the display (300), the augmented reality display with the at least one of virtual object in a compact state for presenting a summary representation of the augmented information of at least one of the real-world object;
Receiving, at the user recognition unit (210), additional user input comprising an indication of interest indicative of the user's interest or a user expression of interest on a sliding scale that has minimally interested towards one end to fully interested towards the other end with various intermediate degrees of interest in-between;
Controlling based on the received additional user input, at the augmented reality engine (250), the expansion growth of the at least one of virtual object in a non-compact state (520, 522); and
Displaying, on the display (300) the virtual object in the non-compact state for presenting the augmented information of the at least one of virtual object with additional information.

2. The method of claim 1, wherein the computing device comprises an eye tracking unit configured to generate the first interest indication value by detecting the user's gaze towards the virtual object.

3. The method of claim 1, further comprising determining, at the device, an appropriate location for the virtual object for display on the display.

4. The method of claim 1, wherein the summary information comprises one or more of the following: an icon, an image, text, or a concise representation of the augmentation information.

5. The method of claim 1, further comprising receiving, at the device, further user input in connection with the virtual object in the non-compact state, the further user input comprises an indication of no interest in the virtual object disposed in the displayed augmented reality display.

6. The method of claim 5, wherein the virtual object transitions from the second state back to the first state when further user input indicates that no interest in the virtual object is detected.

7. A device configured to process the method steps of claim 1 for providing augmentation information comprising an augmented reality system (10) having a display (300), an image capturing unit (100), and an augmented reality unit (200) comprising a user recognition unit (210), an augmented reality engine (250), a virtual object repository unit (240), a region of interest, ROI, and a determining unit (220).

8. The device of claim 7, further comprising an eye tracking unit configured to generate the first interest indication value by detecting the user's gaze towards the virtual object.

9. The device of claim 7, wherein the summary information comprises one or more of the following an icon, an image, text, or a concise representation of the augmentation information.

10. The device of claim 7, wherein the device is further configured to receive further user input in connection with the virtual object in the second state, the further user input comprises an indication of no interest in the virtual object disposed in the displayed augmented reality display.

11. The device of claim 10, wherein the virtual object transitions from the second state back to the first state when further user input indicates that no interest in the virtual object is detected.

## Patentansprüche

1. Verfahren zum Bereitstellen erweiterter Information in einem Augmented-Reality-System (10), das eine Anzeige (300), eine Bilderfassungseinheit (100) und eine Augmented-Reality-Einheit (200) umfasst, umfassend eine Benutzererkennungseinheit (210), eine Augmented-Reality-Engine (250), eine virtuelle Objekt-Repository-Einheit (240), eine Bestimmungseinheit (220) einer Region von Interesse, ROI, wobei das Verfahren die Schritte umfasst:
Anzeigen einer realen Ansicht (410) auf der Anzeige (300), umfassend unter Verwendung der Bilderfassungseinheit (100) erfasste reale Objekte (412-426) ;
Empfangen von Benutzereingabe an der Benutzererkennungseinheit (210), umfassend eine Angabe von Interesse in mindestens einem der realen Objekte in der realen Ansicht;
Erzeugen einer Augmented-Reality-Anzeige an der Augmented-Reality-Engine (250) durch Kombinieren der realen Ansicht mit mindestens einem von einem virtuellen Objekt (512-516, 520-522), das mit dem mindestens einen der realen Objekte assoziiert ist;
Anzeigen der Augmented-Reality-Anzeige auf der Anzeige (300), wobei das mindestens eine von virtuellen Objekten in einem kompakten Zustand für die Präsentation einer zusammenfassenden Wiedergabe der erweiterten Information von mindestens einem der realen Objekte ist;
Empfangen von zusätzlicher Benutzereingabe an der Benutzererkennungseinheit (210), umfassend eine Angabe von Interesse, die das Interesse des Benutzers angibt, oder einen Benutzerausdruck von Interesse auf einer Gleitskala, die von "minimal interessant" in Richtung auf ein Ende zu "vollkommen interessant" in Richtung auf das andere Ende mit verschiedenen dazwischenliegenden Interessensgraden reicht;
Steuern, basierend auf der empfangenen zusätzlichen Benutzereingabe, der Ausdehnungszunahme des mindestens einen von virtuellen Objekten in einem nicht kompakten Zustand (520, 522) an der Augmented-Reality-Engine (250); und
Anzeigen des virtuellen Objekts in dem nicht kompakten Zustand an der Anzeige (300) zur Präsentation der erweiterten Information des mindestens einen von virtuellen Objekten mit zusätzlicher Information.

2. Verfahren nach Anspruch 1, wobei die Recheneinrichtung eine Eye-Tracking-Einheit umfasst, ausgelegt zum Erzeugen des ersten Interesse-Angabewerts mittels Detektierens des Blicks des Benutzers auf das virtuelle Objekt.

3. Verfahren nach Anspruch 1, an der Einrichtung ferner umfassend das Festlegen einer geeigneten Position für das virtuelle Objekt zum Anzeigen an der Anzeige.

4. Verfahren nach Anspruch 1, wobei die zusammenfassende Information eines oder mehrere der Folgenden umfasst: ein Symbol, ein Bild, Text oder eine genaue Wiedergabe der Erweiterungsinformation.

5. Verfahren nach Anspruch 1, an der Einrichtung ferner umfassend das Empfangen von weiterer Benutzereingabe in Verbindung mit dem virtuellen Objekt in dem nicht kompakten Zustand, wobei die weitere Benutzereingabe eine Angabe von Desinteresse an dem in der dargestellten Anzeige erweiterter Realität angeordneten virtuellen Objekt umfasst.

6. Verfahren nach Anspruch 5, wobei das virtuelle Objekt aus dem zweiten Zustand zurück in den ersten Zustand übergeht, wenn eine weitere Benutzereingabe angibt, dass kein Interesse an dem virtuellen Objekt detektiert wird.

7. Einrichtung, ausgelegt zum Abarbeiten der Verfahrensschritte nach Anspruch 1 zum Bereitstellen von Erweiterungsinformation, umfassend ein Augmented-Reality-System (10), aufweisend eine Anzeige (300), eine Bilderfassungseinheit (100) und eine Augmented-Reality-Einheit (200), umfassend eine Benutzererkennungseinheit (210), eine Augmented-Reality-Engine (250), eine virtuelle Objekt-Repository-Einheit (240), eine Region von Interesse, ROI, und eine Bestimmungseinheit (220).

8. Einrichtung nach Anspruch 7, ferner umfassend eine Eye-Tracking-Einheit, ausgelegt zum Erzeugen des ersten Interesse-Angabewerts mittels Detektierens des Blicks des Benutzers auf das virtuelle Objekt.

9. Einrichtung nach Anspruch 7, wobei die zusammenfassende Information eines oder mehrere der Folgenden umfasst: ein Symbol, ein Bild, Text oder eine genaue Wiedergabe der Erweiterungsinformation.

10. Einrichtung nach Anspruch 7, wobei die Einrichtung ferner ausgelegt ist zum Empfangen von weiterer Benutzereingabe in Verbindung mit dem virtuellen Objekt in dem zweiten Zustand, wobei die weitere Benutzereingabe eine Angabe von Desinteresse an dem in der dargestellten Anzeige erweiterter Realität angeordneten virtuellen Objekt umfasst.

11. Einrichtung nach Anspruch 10, wobei das virtuelle Objekt aus dem zweiten Zustand zurück in den ersten Zustand übergeht, wenn eine weitere Benutzereingabe angibt, dass kein Interesse an dem virtuellen Objekt detektiert wird.

## Revendications

1. Procédé pour fournir des informations augmentées dans un système de réalité augmentée (10) qui comprend un écran d'affichage (300), une unité de capture d'image (100), et une unité de réalité augmentée (200) comprenant une unité de reconnaissance utilisateur (210), un moteur de réalité augmentée (250), une unité de référentiel d'objets virtuels (240), une unité de détermination de région d'intérêt, ROI, (220), le procédé comprenant les étapes de :
l'affichage, sur l'écran d'affichage (300), d'une vue de monde réel (410) comprenant des objets de monde réel (412-426) capturés en utilisant l'unité de capture d'image (100) ;
la réception, dans l'unité de reconnaissance utilisateur (210), d'une entrée utilisateur comprenant une indication d'intérêt envers au moins un des objets de monde réel dans la vue de monde réel ;
la génération, dans le moteur de réalité augmentée (250), d'un affichage de réalité augmentée en combinant la vue de monde réel et au moins un d'un objet virtuel (512-516, 520-522) associé à l'au moins un des objets de monde réel ;
l'affichage, sur l'écran d'affichage (300), de l'affichage de réalité augmentée avec l'au moins un de l'objet virtuel dans un état compact pour présenter une représentation récapitulative des informations augmentées d'au moins un de l'objet de monde réel ;
la réception, dans l'unité de reconnaissance utilisateur (210), d'une entrée utilisateur supplémentaire comprenant une indication d'intérêt indicative de l'intérêt de l'utilisateur ou d'une expression d'intérêt utilisateur sur une échelle mobile qui va de l'intérêt minimal, vers une extrémité, à l'intérêt complet, vers l'autre extrémité, avec divers degrés intermédiaire d'intérêt entre ceux-ci ;
la commande, sur la base de l'entrée utilisateur supplémentaire reçue, dans le moteur de réalité augmentée (250), de la croissance d'agrandissement de l'au moins un de l'objet virtuel dans un état non compact (520, 522) ; et
l'affichage, sur l'écran d'affichage (300), de l'objet virtuel dans l'état non compact pour présenter les informations augmentées de l'au moins un de l'objet virtuel avec des informations supplémentaires.

2. Procédé selon la revendication 1, dans lequel le dispositif informatique comprend une unité de suivi des yeux, configurée pour générer la première valeur d'indication d'intérêt en détectant le regard de l'utilisateur vers l'objet virtuel.

3. Procédé selon la revendication 1, comprenant en outre la détermination, dans le dispositif, d'un emplacement approprié pour l'objet virtuel pour l'affichage sur l'écran d'affichage.

4. Procédé selon la revendication 1, dans lequel les informations récapitulatives comprennent un ou plusieurs de ce qui suit : une icône, une image, un texte, ou une représentation concise des informations d'augmentation.

5. Procédé selon la revendication 1, comprenant en outre la réception, dans le dispositif, d'une entrée utilisateur supplémentaire en association avec l'objet virtuel dans l'état non compact, l'entrée utilisateur supplémentaire comprenant une indication d'intérêt nul envers l'objet virtuel disposé dans l'affichage de réalité augmentée affiché.

6. Procédé selon la revendication 5, dans lequel l'objet virtuel effectue la transition, depuis le second état de retour jusqu'au premier état, lorsque l'entrée utilisateur supplémentaire indique qu'un intérêt nul envers l'objet virtuel est détecté.

7. Dispositif configuré pour traiter les étapes de procédé selon la revendication 1, pour fournir des informations d'augmentation comprenant un système de réalité augmentée (10) ayant un écran d'affichage (300), une unité de capture d'image (100), et une unité de réalité augmentée (200) comprenant une unité de reconnaissance utilisateur (210), un moteur de réalité augmentée (250), une unité de référentiel d'objets virtuels (240), une région d'intérêt, ROI, et une unité de détermination (220).

8. Dispositif selon la revendication 7, comprenant en outre une unité de suivi des yeux, configurée pour générer la première valeur d'indication d'intérêt en détectant le regard de l'utilisateur vers l'objet virtuel.

9. Dispositif selon la revendication 7, dans lequel les informations récapitulatives comprennent un ou plusieurs de ce qui suit : une icône, une image, un texte, ou une représentation concise des informations d'augmentation.

10. Dispositif selon la revendication 7, dans lequel le dispositif est en outre configuré pour recevoir une entrée utilisateur supplémentaire en association avec l'objet virtuel dans le second état, l'entrée utilisateur supplémentaire comprenant une indication d'intérêt nul envers l'objet virtuel disposé dans l'affichage de réalité augmentée affiché.

11. Dispositif selon la revendication 10, dans lequel l'objet virtuel effectue une transition, depuis le second état de retour jusqu'au premier état, lorsque l'entrée utilisateur supplémentaire indique qu'un intérêt nul envers l'objet virtuel est détecté.
